(19)

Europäisches Patentamt
European Patent Office
Office européen des brevets

(11) **EP 3 916 621 B1**

(12) **EUROPEAN PATENT SPECIFICATION**

(45) Date of publication and mention
of the grant of the patent:
**21.06.2023 Bulletin 2023/25**

(21) Application number: **20176735.7**

(22) Date of filing: **27.05.2020**

(51) International Patent Classification (IPC):
*G06K 9/62* *(2022.01)* *G06V 20/56* *(2022.01)*
*G06V 10/82* *(2022.01)* *G06N 3/08* *(2023.01)*
*G06N 3/04* *(2023.01)*

(52) Cooperative Patent Classification (CPC):
**G06N 3/08; G06V 10/764; G06V 10/776;**
**G06V 10/82; G06V 20/56;** G06N 3/045

(54) **METHOD AND DIAGNOSTIC UNIT FOR ASSESSING THE RELIABILITY OF AN OBJECT DETECTION UNIT**

VERFAHREN UND DIAGNOSEEINHEIT ZUR BEURTEILUNG DER ZUVERLÄSSIGKEIT EINER OBJEKTDETEKTIONSEINHEIT

PROCÉDÉ ET UNITÉ DE DIAGNOSTIC POUR ÉVALUER DE LA FIABILITÉ D'UNE UNITÉ DE DÉTECTION D'OBJETS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**01.12.2021 Bulletin 2021/48**

(73) Proprietor: **Mission Embedded GmbH**
**1100 Wien (AT)**

(72) Inventors:
• **Sarwar, Omair**
**1020 Wien (AT)**
• **Reisner, Clemens**
**1050 Wien (AT)**
• **Kreilmeier, Michael**
**1050 Wien (AT)**

(74) Representative: **Wildhack & Jellinek**
**Patentanwälte OG**
**Landstraßer Hauptstraße 50**
**1030 Wien (AT)**

(56) References cited:
**US-A1- 2018 157 934**

• **J.C. NASCIMENTO ET AL: "Performance evaluation of object detection algorithms for video surveillance", IEEE TRANSACTIONS ON MULTIMEDIA, vol. 8, no. 4, 1 August 2006 (2006-08-01), pages 761-774, XP055106463, ISSN: 1520-9210, DOI: 10.1109/TMM.2006.876287**
• **SIDDHARTH ANCHA ET AL: "Combining Deep Learning and Verification for Precise Object Instance Detection", ARXIV.ORG, CORNELL UNIVERSITY LIBRARY, 201 OLIN LIBRARY CORNELL UNIVERSITY ITHACA, NY 14853, 27 December 2019 (2019-12-27), XP081566813,**
• **HU XIAOPENG ET AL: "Reliability verification-based convolutional neural networks for object tracking", IET IMAGE PROCESSING, IET, UK, vol. 13, no. 1, 10 January 2019 (2019-01-10), pages 175-185, XP006081321, ISSN: 1751-9659, DOI: 10.1049/IET-IPR.2018.5785**

**Description**

The invention relates to a method for assessing the reliability of an object detection unit according to claim 1, a diagnostic unit for assessing the reliability of an object detection unit according to claim 9 and an imaging system including such a diagnostic unit according to claim 16.

Object detection units, in particular combined with imaging sensors, are used in various fields of application. Reliable object detection using information provided by such object detection units is critical in many fields of application. For instance, imaging sensors can be mounted in or on vehicles and combined with an object detection unit to assist the driver of the vehicle to identify important traffic signals or traffic signs relevant for the respective vehicle and to avoid human failure by misinterpretation of those signals or signs. Especially in this context, it is necessary to ensure that the object detection unit is working reliably. Many imaging systems used in fields of application related to transportation and traffic comprise object detection units. Such object detection units can identify objects in images based on object detection and/or classification methods such as neural networks.

Nascimiento J.C. et al: "Performance evaluation of object detection algorithms for video surveillance", IEEE Transactions on Multimedia, vol. 8, no. 4, August 2006, pages 761-774, discloses methods to evaluate the performance of object detection algorithms in video sequences. A user defines the test sequence to generate the ground truth for comparison with the output of the object detection algorithm. The output of the algorithm is compared with ground truth and the differences are measured.

Siddharth A et al: "Combining Deep Learning and Verification for Precise Object Instance Detection", arxiv.org/abs/1912.12270v1, Conference on Robot Learning (CoRL), 27 December 2019, discloses a set of verification tests which can be used to assess object detectors. First an instance detector trained on objects of interest is used to provide candidate detections and an object class for target objects. A pixel-wise correspondence between template images and each proposed detection is predicted and verification tests are conducted to ascertain whether the proposed class of the detection is correct.

US 2018/157934 A1 discloses a method and a system to determine the reliability of the output of a neural network using an inspection neural network (INN). The inspection neural network may be used to examine data generated from a primary neural network (PNN) during the PNN's decision making or inference process. The examined data may include the initial input data to the PNN, the final output of the PNN, and also any intermediate data generated during the inference process. Based on this data, the INN may generate a reliability metric for an output of PNN.

Hu Xiaopeng et al: "Reliability verification-based convolutional neural networks for object tracking", IET Image Processing, vol. 13, no. 1, January 2019, pages 175-185, discloses a tracking method based on the verification network to guarantee the reliability of the tracking network and then avoid the drift problem. The whole network consists of a tracking network and a verification network. Moreover, the verification network corrects the results obtained from the tracking network to avoid accumulating errors. To make the verification network more precisely evaluate the similarity between the tracking results and target, the characteristics and the similarity labels are optimised by feature selection and label enhancement.

While hardware checks to ensure that imaging sensors are working reliably, especially as far as their hardware is concerned, are state of the art, there is still a need for dependable methods to ensure that object detection units reliably identify objects in images provided to them.

For this reason, one objective of the invention is to provide a method and a diagnostic unit for assessing the reliability of an object detection unit and in particular to test the object detection unit for safety compliance according to safety integrity level.

The invention solves this problem with a method according to claim 1

The method according the invention can be used to assess the reliability of an object detection unit which is programmed to detect images of objects and their positions and object types in two- or three-dimensional images provided to the object detection unit by using an object detection and/or a classification method, in particular a neural network. In the following, the term "image" as used, e.g. in connection with "test image" or "image of the scene", is to be understood as encompassing any kind of image data. Such image data include two-dimensional images provided by, for instance, 2D-imaging sensors like cameras, thermal imaging sensors, etc. and three-dimensional images provided by imaging sensors such as RADAR, LIDAR, or ultrasound sensors.

In the following, to "lie substantially within the defined tolerance margin around the known position" means that the detected position of the detected object, if necessary with some detection margin to cover potential localization errors, lies entirely within the tolerance margin around the known position or that, if applicable, the detection margin around the detected position significantly overlaps with the tolerance margin around the known position, e.g. in a such a way that at least 50% of the detection margin lie within the defined tolerance margin.

The method according to the invention provides the possibility to effectively and reliably test object detectors which employ object detection algorithms such as neural networks with regard to a given safety integrity level. So far, it was not possible to efficiently assess, if such object detection units were working reliably. By assessing them against "ground truth" represented by test images which include selected reference objects with known object types at known positions with a defined tolerance margin, it is easy to test if the object detection unit is working properly.

As it is known which objects and at which position, e.g. in which image region of each test image need to be detected by the object detection unit, the assessment method can be carried out quickly and in real-time during standard operation of the object detection unit. This provides the possibility to react immediately, if a malfunction of the object detection unit is detected, which avoids, e.g. wrong identification of important traffic signals or traffic signs and human failure caused by misinterpretation of those signals or signs. The assessment of the object detection unit with a method according to the invention advantageously does not require any downtime.

In an advantageous embodiment the invention may further be improved in that the test image provided to the object detection unit is an, in particular modified, image of a scene taken by an imaging sensor, in particular by an imaging sensor mounted in or on a vehicle, preferably a train or a car. With this embodiment of the invention it is advantageously possible to directly use images taken by an imaging sensor as test images or modify images of the scene into test images. This is especially advantageous, because the sensor is instantaneously tested in the real environment using recently captured data against any type of malfunctioning.

As in some field of application a sequence of images, i.e. a certain number of, e.g., images of a scene per time unit, is needed for further processing, the method according to the invention may be improved in that the imaging sensor is configured to take sequences of images of the scene, and said sequence of images of the scene taken by the imaging sensor is provided to the object detection unit and
in that

- the at least one test image is inserted in the sequence of images of the scene and/or
- at least one image of the scene out of the sequence is the test image or is modified into the test image and/or
- at least one image of the scene out of the sequence is exchanged for a test image.

This embodiment of the invention makes it possible to assess the reliability of an object detection unit during operation of the imaging sensor by e.g. inserting test images in the sequence of images of the scene or exchanging some images of the scene for test images. This ensures efficient and reliable detection of a potential malfunction of the object detection unit while the number of images of the scene required e.g. for further processing is still available.

To ensure that test images are readily available whenever they are needed, in a preferred embodiment the method according to the invention may be improved in that a catalogue of test images is provided, wherein said test images of the catalogue are single individual test images and wherein the test image provided to the object detection unit is selected from said catalogue of single test images. Providing such a catalogue of test images saves computing time as the test images do not need to be created when an assessment of the object detection unit is required, but may simply be selected from the predefined catalogue.

In order to test if the object detection unit is detecting objects reliably when a sequence of, e.g. images of a scene is provided to the object detection unit, the method according to the invention may further be improved in that a catalogue of sequences of images is provided, wherein a number of said images of the sequence are test images containing the image of the reference object,

wherein said number of test images is included at predefined sequence positions in the sequence of test images in the image catalogue,
wherein a sequence of said images from the catalogue is provided to the object detection unit and
wherein the object detection unit is determined to be reliable if, additionally, the sequence positions of the test images containing a reference object corresponds to the sequence positions of the images in which detected objects were detected.

With such a catalogue of sequences of images is possible to conduct, for example, offline assessment of the object detection with regard to correct detection of objects in fields of application where sequence of images, i.e. a certain number of, e.g., images of a scene per time unit, are provided to the object detection unit.

In order to assess the object detection unit's reliability with regard to detection of reference objects relevant for, e.g. specific environments or traffic situations, in an advantageous embodiment of the invention, after selecting the reference object, the image of said reference object may be inserted at a predefined known position in the test image, in particular in the image of the scene. This helps to validate the object detection unit even in those scenarios where the object of interest, i.e. an object for which the object detection unit should be trained, does not appear inside the captured images.

In order to assess the object detection unit's reliability in particular with regard to detection of specific types of reference objects, in an advantageous embodiment of the invention, the reference object may be a standard object with a known shape, in particular a standard object with the shape of a human, a traffic signal or a car. Depending upon the application domain of the object detection unit, specific types of reference objects can be selected.

To ensure that a wide range of reference objects are readily available whenever they are needed, in a preferred embodiment the method according to the invention may be improved in that the reference object is selected from a predefined catalogue of reference objects, wherein the catalogue of reference objects includes a plurality of images of said reference objects captured under different image acquisition conditions, in particular captured under varying viewing angles and/or weather conditions and/or lighting conditions. Providing such a catalogue of reference objects saves computing time as the reference objects may simply be selected from the predefined catalogue and do not need to be created when an assessment of the object detection unit is required.

In order to be able to select reference objects appropriate for certain environmental conditions, the method according to the invention may be improved in that the content, in particular the weather and/or lighting conditions and/or the orientation of structures of interest, preferably a rail track and/or a road, of the test image, in particular the image of the scene, is determined, in particular by using neural networks, and in that the reference object is selected based on the determined content of said test image.

Reference objects, e.g. inserted in images of a scene which were captured in, e.g. sunlight, might be easier to detect in images of a scene which were captured under, e.g. overcast or rainy weather conditions. Therefore, determining the content, for instance, the environmental conditions which were present when, e.g. an image of the scene was taken, increases the reliability of the assessment of the object detection unit.

In a further advantageous embodiment of the invention, the possibility to directly use images of a scene as test images may be provided. In this preferred embodiment the method according to the invention may be improved in that

- at least one map of the scene is provided, wherein said map includes the positions and object types of a plurality of reference objects which can be captured in the image of the scene by the imaging sensor from a predefined distance, in particular traffic signs and/or railway signals and/or traffic lights, and
- the imaging sensor, in particular the position and the field of view of the imaging sensor, is localized in the scene,
- the location of the imaging sensor in the scene is identified in the map, and
- the reference object to be detected in the test image is selected from said plurality of reference objects based on the location of the imaging sensor in the map and the distance of the imaging sensor to said reference objects, in particular by selecting the closest on-coming reference object.

Using this approach, it is advantageously possible to use, e.g. traffic signs or railway signals with known positions along, e.g. traffic infrastructure, which are captured in images during routine operation of imaging sensors, e.g. mounted on vehicles, as reference objects and therefore images of the scene can be used as test images.

In order to be able to efficiently select reference objects to be detected in images of a scene used as test images, in an advantageous embodiment the method according to the invention may be improved in that the imaging sensor is mounted in or on a vehicle, in particular a train or a car, and

a catalogue of maps is provided, wherein the maps additionally include traffic infrastructure that is used by the vehicle, in particular roads and/or rail tracks,
preferably wherein an on-coming reference object associated with the traffic infrastructure the vehicle is using is selected.

In order to ensure the correct functioning of an imaging sensor connected with the object detection unit, a method according the invention may be improved in that, before selecting the reference object to be detected in the test image, the correct functioning of the imaging sensor is tested by evaluating whether the imaging sensor is generating the configured number of images per second and/or pixel intensity values differ between any two consecutive images.

A further aspect of the invention is to provide a diagnostic unit for carrying out a method according to the invention. This problem is solved with a diagnostic unit for assessing the reliability of an object detection unit according to claim 9,

- wherein the object detection unit is configured to receive image data, in particular in a predefined sequence of images and/or in a random way, in particular from the diagnostic unit and/or images of a scene taken by an imaging sensor, and programmed

  ∘ to detect images of objects and their positions and object types in one- or more-dimensional images provided to the object detection unit by using an object detection and/or a classification method, in particular a neural network, and
  ∘ to provide the detected position and object type of the detected object to the diagnostic unit, and

- wherein the diagnostic unit is connectable with the object detection unit and configured to receive data, in particular detected positions and object types of detected objects, from the object detection unit, and to transmit at least one test image to the object detection unit, and wherein the diagnostic unit is programmed to

  ○ select at least one reference object with a known position and a known object type wherein the image of said reference object is to be detected by the object detection unit, wherein the image of said reference object is contained in the test image,
  ○ define a tolerance margin around the known position of the reference object for acceptable detection of the position of said reference object in the test image,
  ○ compare the known position and object type of the reference object with the detected position and object type of the detected object provided by the object detection unit, and
  ○ determine the object detection unit to be reliable if

    - the object type of the reference object corresponds to the object type of the detected object and
    - the detected position of the detected object, in particular a detection margin around the detected position, lies substantially within the before defined tolerance margin around the known position of the reference object.

A diagnostic unit according to the invention provides the possibility to effectively and reliably test object detectors which employ object detection algorithms such as neural networks with regard to a given safety integrity level using a method according to the invention. A diagnostic unit according to the invention ensures that object detection units may be tested against "ground truth" represented by test images which include selected reference objects with known object types at known positions with defined tolerance margin in a fast and simple way. As the object type and position of the reference objects in the test images is known to the diagnostic unit, assessment of an object detection unit with regard to correct detection can be carried out in real-time during standard operation of the object detection unit. This provides the possibility to immediately detect malfunctions of the object detection unit during routine operation of the object detection unit.

In a preferred embodiment of the invention that allows to directly use images taken by an imaging sensor as test images or modify images of the scene into test images, the diagnostic unit is configured to provide test images, in particular, preferably modified, images of a scene taken by an imaging sensor and/or test images from a catalogue, to the object detection unit.

In order to efficiently assess the reliability of an object detection unit with regard to correct detection of objects in a sequence of images, a preferred embodiment of the invention may be provided in that the diagnostic unit is configured to

- insert the at least one test image in a sequence of images of a scene taken by an imaging sensor and/or
- select at least one image of the scene out of a sequence of image of a scene taken by an imaging sensor as the test image or to be modified into the test image and/or exchange at least one image of the scene out of a sequence of images of a scene taken by an imaging sensor for a test image.

This configuration of a diagnostic unit according to the invention ensures efficient and reliable detection of a potential malfunction of the object detection unit while e.g. the number of images of the scene required for further processing is still available.

The diagnostic unit according to the invention may further be improved in that the diagnostic unit comprises a storage unit for a predefined catalogue of test images, wherein said test images of the catalogue are single individual test images and
that the diagnostic unit is programmed to select a test image from said catalogue of single test images and provide it to the object detection unit. This preferred embodiment of the invention is advantageous because test images may simply be selected from the predefined catalogue, which saves computing time.

In order to test if the object detection unit is detecting objects reliably when a sequence of, e.g. images of a scene is provided to the object detection unit, the diagnostic unit according to the invention may further be improved in that the diagnostic unit

- comprises a storage unit for a predefined catalogue of sequences of images, wherein a number of said images of the sequence are test images containing the image of the reference object and wherein said number of test images is included at predefined sequence positions in the sequence of test images in the catalogue of test images and
- is programmed

∘ to select and provide a sequence of said images from the catalogue to the object detection unit and
∘ to determine the object detection unit to be reliable if

- additionally the sequence positions of the test images containing a reference object corresponds to the sequence positions of the test images in which the detected object were detected.

For particularly fast and easy assessment of reliability of an object detection unit during operation, in a preferred embodiment of the invention the diagnostic unit may be improved in that the diagnostic unit is programmed, after selecting the reference object, to insert the image of said reference object, in particular a standard reference object with a known shape, at a predefined known position in the test image, in particular in the image of the scene. This helps to validate the object detection unit even in those scenarios where the object of interest, i.e. an object for which the object detection unit should be trained, does not appear inside the captured images.

For particularly reliable assessment of reliability of an object detection unit with regard to correct identification of objects under different environmental conditions, in a preferred embodiment of the invention the diagnostic unit may be improved in

- that the diagnostic unit comprises a storage unit for a predefined catalogue of reference objects and
- that the diagnostic unit is programmed to select the reference object from the predefined catalogue of reference objects,

wherein said catalogue of reference objects includes a plurality of images of said reference objects captured under different image acquisition conditions, in particular captured under varying viewing angles and/or weather conditions and/or lighting conditions.

For further improvement of the reliability of the assessment of an object detection unit with regard to correct identification of objects under different environmental conditions, in a preferred embodiment of the invention the diagnostic unit may be improved in that the diagnostic unit is programmed

- to determine the content, in particular the weather and/or lighting conditions and/or the orientation of structures of interest, preferably a rail track and/or a road, of the test image, in particular of the image of the scene, preferably by using neural networks, and
- to select the reference object based on the determined content of said test image.

In order to be able to use objects which are necessarily present in, e.g. images of a scene provided to the object detection unit as reference objects and therefore to directly use such images of a scene as test images, in a preferred embodiment the diagnostic unit may be improved in

- that the diagnostic unit is configured to receive location data from a geolocation unit,
- that the diagnostic unit comprises a storage unit for at least one map of the scene and
- that the diagnostic unit is programmed

∘ to find a location, in particular a location of an imaging sensor, provided to the diagnostic unit within the map of the scene, wherein said map includes the positions and object types of a plurality of reference objects which can be captured in an image of the scene from a predefined distance, in particular traffic signs and/or railway signals and/or traffic lights, and
∘ to select the reference object to be detected in the test image from said plurality of reference objects based on the location, in particular the location of the imaging sensor, in the scene and the map of the scene,
∘ in particular to select an on-coming reference object.

In order to be able to efficiently select reference objects to be detected in images of a scene used as test images, in an advantageous embodiment the diagnostic unit according to the invention may be improved in that it is programmed

∘ to find the location, in particular the location of the imaging sensor, provided to the diagnostic unit within a catalogue of maps which is stored in the storage unit, wherein the maps additionally include traffic infrastructure for use by vehicles, in particular roads and/or rail tracks, and
∘ preferably to select an on-coming reference object associated with the traffic infrastructure the location, in particular the location of the imaging sensor, provided to the diagnostic unit is associated with.

In order to ensure the correct functioning of an imaging sensor connected with the object detection unit, a diagnostic unit according the invention may be improved in that the diagnostic unit is programmed to test the correct functioning of the imaging sensor before defining the reference object to be detected in the image of the scene, by evaluating whether the imaging sensor is generating the configured number of frames per second and/or pixel intensity values differ between any two consecutive frames.

The invention further solves the above-mentioned problem with an imaging system according to claim 16.

In order to ensure particularly exact localization of the imaging sensor, in a preferred embodiment of the invention the imaging system may comprise a geolocation unit connected to the diagnostic unit, wherein the geolocation unit is configured to determine the location of the imaging sensor, in particular the position and the field of view of the imaging sensor, in a scene.

In order to be able to provide an imaging system particularly for fields of application where a certain number of images per time unit need to be provided for further processing, in a preferred embodiment of the invention the imaging sensor may be configured to take sequences of images of a scene.

The following detailed description of preferred embodiments of the invention is merely exemplary in nature and is not intended to limit the invention or the application and uses of the invention. The invention will be described with reference to the following figures which are provided by way of explanation only.

Fig. 1 depicts a typical image of a scene taken from a vehicle, in particular a train,

Fig. 2 schematically shows the insertion of a reference object in the image of the scene of fig. 1 according to a first embodiment of the invention,

Fig. 3 shows a schematic representation of the known position and the tolerance margin around the known position of the reference object inserted in fig. 2,

Fig. 4 schematically shows the detected position and object type of an object detected in the image of fig. 2 by the object detection unit,

Fig. 5 shows a schematic representation of the comparison of the known position of the reference object with the detected position of the detected object,

Fig. 6 shows a map as used in an advantageous second embodiment of the invention,

Fig. 7 schematically shows locations of a vehicle, in particular a train, determined using geolocation methods,

Fig. 8 shows a typical image of a scene including signals as reference objects taken from the vehicle in fig. 7,

Fig. 9 shows the calculated ground position of the signal in fig. 8 for comparison with the map in fig. 6.

In the following, the invention is described with reference to a first preferred embodiment of the invention. In this first embodiment, an imaging sensor is mounted on a vehicle G which is a train. The imaging sensor which is at least partly directed in the driving direction of the train, i.e. the direction of travel or movement of the train, takes two-dimensional images A of the surrounding area, in particular of the rail track and of the signals. Such image sensors can simply be mounted on the front part of the train.

In the first embodiment of the invention, a standard two-dimensional camera, e.g. an area scan camera, is used as imaging sensor, which produces two-dimensional images. Such imaging sensors are widely available, easy to assemble and in general simple and reliable to use. Of course, three-dimensional images A of the scene provided by, for instance, stereo imaging sensors may also be used. Other systems for three-dimensional environmental perception, e.g. LIDAR, radar sensors or 3D ultrasonic sensors are also suitable.

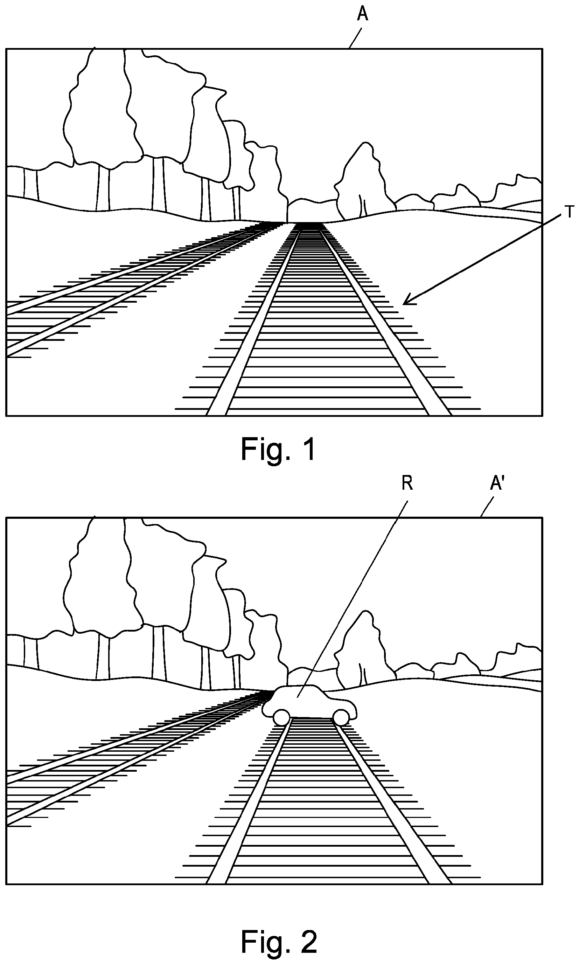

The imaging sensor is connected with an object detection unit which is mounted in the vehicle G and programmed to detect images of objects B and their positions C and object types in images A of a scene as shown in Fig. 1 and/or in test images A' provided to the object detection unit. An example of a typical image A of a scene is shown in fig. 1. As can be seen in fig. 1 such an image A of the scene contains in particular the rail track T the train is using.

The object detection unit is also connected to a diagnostic unit according to the first embodiment of the invention. Together with the imaging sensor, the object detection unit and the diagnostic unit may form part of an imaging system.

To detect objects in images A of a scene and/or test images A' provided by the imaging sensor the object detection unit uses an object detection and/or classification method such as J. Redmon, et al. "You Only Look Once: Unified, Real-Time Object Detection," 2016 or W. Liu, et al, "SSD: Single Shot MultiBox Detector", 2016 or L. Chen et al, "Encoder-Decoder with Atrous Separable Convolution for Semantic Image Segmentation" 2018.

Additionally or alternatively, test images A' may be provided to the object detection unit by the diagnostic unit. Such images may also be images A of a scene which are stored in the diagnostic unit, in particular a storage unit of the diagnostic unit, or virtual images. As will be described below, also a predefined catalogue including single individual test images A' and/or sequences of images with test images A' among them may be stored in the storage unit and provided to the object detection unit for assessment of its reliability.

To assess the reliability of the object detection unit, in the first embodiment the diagnostic unit selects at least one reference object R to be inserted in an image A of the scene provided by the imaging sensor to the object detection unit. The object detection unit is then tested with regard to correct detection and identification of the image of said reference object R, i.e. object type, and its known position P. In the first embodiment of the invention, the selected reference object R is a standard object with a known object type, for example a reference object R with the shape of a car, in particular an SUV, i.e. a sports utility vehicle, as can be seen in fig. 2.

Fig. 2 is an example of such a test image A' which represents the image A of the scene in fig. 1 with the reference object R inserted at a known position, e.g. on the rail tracks T. Testing the object detection unit with regard to, e.g. correct identification of cars on the rail tracks T, is advantageous because it is desirable that object detection units reliably identify cars on rail tracks T in order to be able to stop the train in such a case in order to avoid accidents.

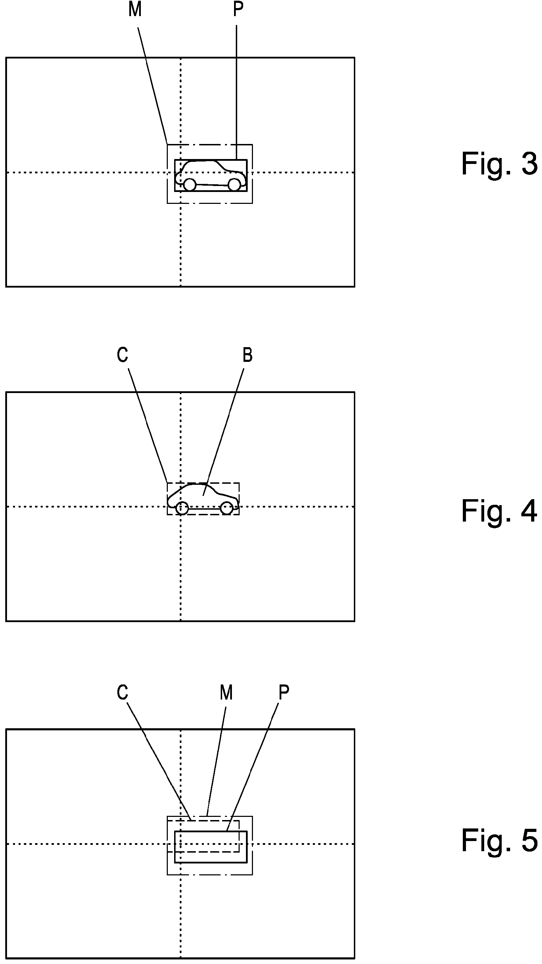

The reference object R is inserted at a known position P in the image A of the scene which is depicted schematically in fig. 3. As can be seen in fig. 3, the diagnostic unit defines a tolerance margin M around the known position P of the reference object R when the reference object R is inserted in the image A of the scene. Such tolerance margins M are used to characterize the region wherein the detection of the position C of a detected object B in the test image A' corresponding to the reference object R would still be acceptable.

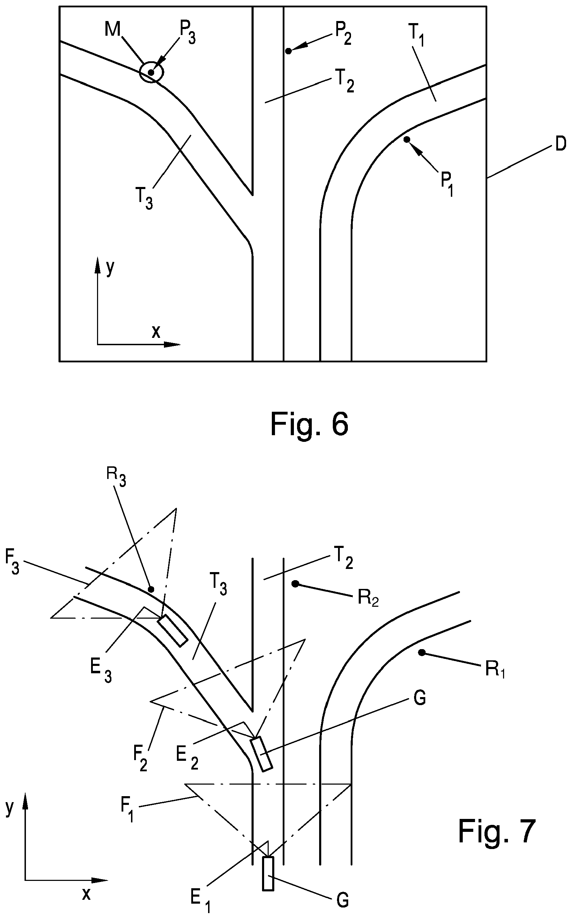

Such tolerance margins M can be defined using different methods, such as defining an, e.g. rectangular, bounding box, a circle, an ellipsoid etc. The tolerance margin M could be determined heuristically depending on, for instance, the configuration of the object detection unit, i.e. object detector type or method used for object detection. In addition to that or alternatively, the localization accuracy of the method used for localizing the imaging sensor in the scene, e.g. GPS or SLAM, may be taken into consideration, which will be described in more detail with reference to fig. 6 to 9 in the second embodiment of the invention.

Afterwards, the test image A' with the reference object R at its known position P in the test image A' is provided to the object detection unit by the diagnostic unit. The object detection unit then identifies at least one object B using the algorithms and methods stated above in the test image A'. As can be seen in fig. 4, the object detection unit identifies a detected object B at a detected position C based on the test image A' in fig. 2. In addition to the detected position C also the object type of the detected object B is determined by the object detection unit by using methods of the state of the art such as J. Redmon, et al. "You Only Look Once: Unified, Real-Time Object Detection," 2016 or W. Liu, et al, "SSD: Single Shot MultiBox Detector", 2016 or L. Chen et al, "Encoder-Decoder with Atrous Separable Convolution for Semantic Image Segmentation" 2018.

Finally, the diagnostic unit compares the known position P and object type of the reference object R with the detected position C and object type of the detected object B and determines, if both known position P and detected position C lie inside tolerance margin M, and if the known and detected object types for object identification correspond using the output of a relational operator (see J. Redmon, et al. "You Only Look Once: Unified, Real-Time Object Detection," 2016 or W. Liu, et al, "SSD: Single Shot MultiBox Detector", 2016 or L. Chen et al, "Encoder-Decoder with Atrous Separable Convolution for Semantic Image Segmentation" 2018).

This is depicted schematically in fig. 5. As can be seen in fig. 5, the detected position C of the detected object B lies within the tolerance margin M around the known position P of the reference object R. This is considered as correct detection of the position of the reference object R by the diagnostic unit.

As stated above, apart from the position, also the object type of the detected object B is compared to the object type of the reference object R which was inserted in the test image A'. As can be seen in fig. 3, the object detection unit identifies a sedan car located at position C in the test image A'. As the reference object R inserted in the test image A' is an SUV, i.e. also a car, the diagnostic unit considers this as a correct detection of the reference object R. This means that also the object type of the reference object R corresponds to the object type of the detected object B.

As both the object type and the detected position were detected correctly, the object detection unit is determined to be reliable by the diagnostic unit in this first embodiment of the invention.

Of course, a method according to the invention optionally also allows an assessment of the reliability of an object detection unit using more than one reference objects R with a known position P and object type in each test image A'. In this case, the object detection unit can detect a plurality of detected objects B and their respective detected positions C and object types in each test image A' and the diagnostic unit is configured to compare the positions and object types of multiple detected objects B and reference objects R. For faster comparison, the known positions P and object types of the reference objects R many only be compared with detected positions C and object types of detected objects B which are detected in, e.g. the same image quadrant of the test image A', the reference object R was inserted in.

Optionally, it is possible in this context that the diagnostic unit provides an alarm signal if the object detection unit is not determined to be reliable because the object type and/or the detected position C of the detected object B do not correspond to the known object type and known position P of the reference object R with some tolerance margins M.

Alternatively or additionally, the diagnostic unit may interrupt further processing of the data provided by the object detection unit or mark such data if the object detection unit is determined not to be reliable.

In this first embodiment of the invention the selected reference object R is a standard object with a known shape. Such standard objects with known shapes may be comprised in a catalogue of reference objects R stored in the diagnostic unit, e.g. in a storage unit comprised by the diagnostic unit.

Such a catalogue of reference objects R may include various kinds of standard objects with known shapes, such as a human shape, the shape of a traffic signal or, as shown in fig. 2, the shape of a car. Optionally such a catalogue of reference objects R does not only include different standard objects R with different shapes, but also a plurality of images of said reference objects R which were captured under different image acquisition conditions. This means that they were, for example, captured under varying viewing angles and/or varying weather conditions and/or different lighting conditions.

If such a catalogue of reference objects R is provided, it is advantageous if the diagnostic unit determines the content of, for example, the image A of the scene shown in Fig. 1 before providing the test image A'. The content of the test image A', respectively the image A of the scene, concerns not only what can be seen in the image, but also the weather and/or lighting conditions under which the test image A' and/or the image A' of the scene was taken. Apart from that, additionally or alternatively, also the orientation of rail tracks T and/or a road might be present in the test image A' and/or the image A of the scene. This could be achieved by using neural networks, see e.g. S. Lee et al., "VPGNet: Vanishing Point Guided Network for Lane and Road Marking Detection and Recognition," 2017 or classical line detection algorithms e.g. Lee et al, "Outdoor place recognition in urban environments using straight lines" 2014.

Once the diagnostic unit has determined the content of the image A of the scene the reference object R can be selected based on this determined content and inserted in the test image A'. This can be done either by selecting, e.g. a reference object R captured under the identified lighting and/or weather conditions, or by selecting a reference object R according to the content of the depicted scene. There may also be separate sensors such as photodetectors for determination of the weather and/or environmental conditions connected with the diagnostic unit for identification of lighting and/or weather conditions in order to select an adequate reference object R.

While, e.g. a standard object with the shape of a car would be a good reference object R for testing an object detection unit associated with a train, a standard object with the shape of a human may present a good reference object R for an object detection unit associated with a car.

Of course, the test image A' provided to the object detection unit may not only be an image A of the scene provided by the imaging sensor and modified by insertion of the reference object R. The test image A' may also be a predefined test image A' with at least one reference object R stored in the diagnostic unit which is provided to the object detection unit by the diagnostic unit if a reliability test is required.

Apart from the simple first embodiment of the invention which was described with reference to fig. 1 to fig. 5 where only one test image A' was provided to the object detection unit, a whole sequence of test images A' may also be provided to the object detection unit to assess its reliability.

Of course, it is also possible that a method according to the invention is carried out repeatedly, e.g., regularly during operation of e.g. an imaging system according to the invention comprising at least one imaging sensor, an object detection unit and a diagnostic unit for assessing the reliability and integrity of the object detection unit. If, for instance, the imaging sensor is configured to take sequences of images A of a scene, e.g. the railway section in fig. 1, it provides a number of n images A of the scene per time unit. Assuming that a number of n-m of these images A of the scene are needed for further processing in order to receive, for instance, information about on-coming railway signals or obstacles, up to m of the n images A of the scene provided by the imaging sensor are not required for efficient further processing and may therefore, e.g. be used as test images A' as shown in the first embodiment of the invention described above.

Of course, if an imaging sensor provides a sequence of images A of the scene, the diagnostic unit may provide test images A' to the object detection unit in different ways:

First, the diagnostic unit may insert at least one test image A' in the sequence of images A of a scene taken by the imaging sensor. In order to do this, the diagnostic unit may comprise a storage unit in which a predefined catalogue of test images A' is stored. These test images A' may be single individual test images A'. This means that the test images A' are independent of each other and may be test images A' with reference objects R suitable for, e.g. different means of transportation and/or traffic situations and/or weather and/or lighting conditions.

The diagnostic unit may then select one of the test images A' in the catalogue and may insert it at a random position in the incoming stream of images A' of the scene delivered by the imaging sensor. For selection of an appropriate test image A' from the catalogue, the diagnostic unit may take the content of, e.g. selected images A' of the scene into consideration. This means that the inserted test images A' are provided to the object detection unit in addition to the incoming sequence of images A of the scene delivered by the imaging sensor, which may be advantageous if a high number of the incoming images A' of the scene is required for further processing.

Second, additionally or alternatively to the above-mentioned procedure, the diagnostic unit may exchange at least one image A of the scene out of the incoming sequence of images A of a scene taken by the imaging sensor for a test image A'. This means that the test images A' are provided to the object detection unit instead of selected images A of the scene of the incoming sequence delivered by the imaging sensor, which may be advantageous to save time and processing power.

Third, additionally or alternatively to the above-mentioned procedures, the diagnostic unit may select at least one image A of the scene out of the sequence of images A of a scene taken by the imaging sensor to be modified into the test image A'. This means, as shown in the first embodiment of the invention in fig. 1 to 5, the diagnostic unit may insert at least one reference object R in at least one of the images A of the scene delivered by the imaging sensor and provide it to the object detection unit as a test image A'. Of course, the diagnostic unit may also select one of the incoming images A' of the scene delivered by the imaging sensor to be used as a test image A', which will be described in more detail below with reference to the second embodiment and fig. 6 to 9.

All these possibilities for providing a test image A' to the object detection unit are advantageous as they can be carried out during routine operation of the object detection unit, e.g. for real-time assessment if the object detection unit is working reliably.

Of course, apart from or in addition to a predefined catalogue of single individual test images A', a predefined catalogue of sequences of images may be stored in the diagnostic unit, e.g. its storage unit.

Among said images stored in the diagnostic unit, a number of them are test images A' and contain the image of at least one reference object R which was selected to be detected by the object detection unit. In this case, the test images A' which include the image of the reference object R are included at predefined sequence positions in the sequence of the images in the predefined catalogue of images in the storage unit.

In order to assess the reliability of the object detection unit, the diagnostic unit may select such a sequence of said images including test images A' from the predefined catalogue and provide said sequence to the object detection unit. As stated above, some of these images are test images A' and contain at least one reference object R with a known position P and a known object type and these test images A' are included at predefined sequence positions in the sequence of images. The diagnostic unit can in this case determine the object detection unit to be reliable if the following criteria are fulfilled:

- The position C and object type of the detected object B in each test image A' corresponds to the object type and the position P of the reference object R included in the test image A' and
- the sequence position of the test images A' which include these detected objects B was identified correctly by the object detection unit as the sequence positions of the test images A' containing the reference object R.

This means that in a sequence of, for instance, seven images where a test image A' which contains a reference object R is included at sequence positions 3 and 5, detected objects B corresponding to the reference objects R need to be detected at sequence position 3 und 5 by the object detection unit in order to be determined as reliable by the diagnostic unit.

Of course, if sequences of images with test images A' among them are used to assess the reliability of an object detection unit or if a sequence of images A of a scene is provided to the object detection unit with test images A', e.g. inserted in-between, the diagnostic unit may set a threshold value for reliable detection by the object detection unit. This means that out of, e.g. 100 test images A' provided to the object detection unit, in e.g. at least 95 of them the detected position C of the detected object B needs to lie within tolerance margin M around the known position P of the reference object R and the object type of the detected object B needs to correspond to the known object type of the reference object R. If this is the case, the object detection unit is determined to be reliable.

A **second embodiment** of the invention will now be described with reference to fig. 6 to 9. Fig. 6 shows an example of a map D of a scene which includes the positions $P_1$, $P_2$, $P_3$ and object types of a plurality of reference objects $R_1$, $R_2$, $R_3$ which can be captured in an image A of the scene by an imaging sensor from a predefined distance, e.g. from a distance of several hundred meters. Such reference objects $R_1$, $R_2$, $R_3$ may be, e.g. overhead signals for trains. Other examples of such reference objects $R_1$, $R_2$, $R_3$ could be traffic signs, traffic lights or other railway signals.

As can be seen in fig. 6, the map D is a two-dimensional map in a bird's eye perspective and includes, apart from three rail tracks $T_1$, $T_2$, $T_3$, the positions $P_1$, $P_2$, $P_3$ of three reference objects $R_1$, $R_2$, $R_3$. The black dots at the positions $P_1$, $P_2$, $P_3$ indicate the object type of the respective reference objects $R_1$, $R_2$, $R_3$. In fig. 6 the black dots indicate that the reference objects $R_1$, $R_2$, $R_3$ associated with these positions $P_1$, $P_2$, $P_3$ are overhead railway signals. In addition, in fig. 6 a circular tolerance margin M is highlighted around the known position $P_3$ of the reference object $R_3$ for acceptable detection of the position $P_3$ of said reference object $R_3$ in a test image A'.

Fig. 7 shows a schematic representation of the scene in the map D in fig. 6. As can be seen in fig. 7, a vehicle G which is a train with an imaging sensor mounted on the train is moving through the scene and the train and thus also the imaging sensor mounted on the train is localized at three consecutive positions $E_1$, $E_2$, $E_3$ in the scene. The imaging sensor is part of an imaging system as described in connection with the first embodiment of the invention. The examples of imaging sensors suitable for the use of the invention given before are also applicable in the second embodiment of the invention.

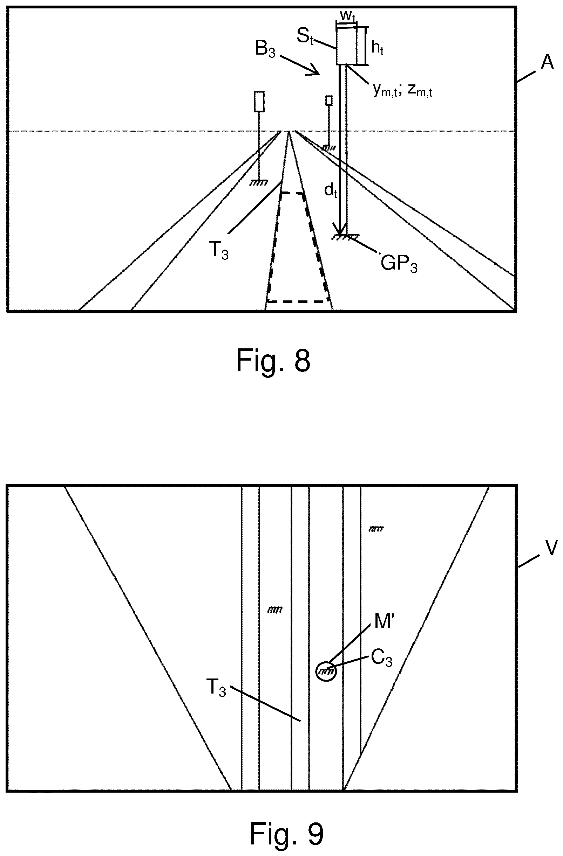

As shown in fig. 7, the vehicle G is first moving along track $T_2$ and then along track $T_3$. The imaging sensor is directed in the driving direction of the train and takes two-dimensional images A of the scene. An example of such an image A of the scene is shown in fig. 8.

In the second embodiment of the invention, the imaging sensor and in particular its position $E_1$, $E_2$, $E_3$ and the

field of view $F_1$, $F_2$, $F_3$ of the imaging sensor is localized in the scene. In order to do this the processing unit may be connected with a geolocation unit which detects the geographical positions of the imaging sensor and its field of view using geolocation methods such as global navigation satellite system (GPS) or simultaneous localizing and mapping (SLAM). As a result, the actual position of the imaging sensor mounted on the train which is specified by coordinates is known at each time. The geolocation unit provides this location information of the imaging sensor to the diagnostic unit and the diagnostic unit identifies the location of the imaging sensor provided to the diagnostic unit in the map D.

The reference object $R_1$, $R_2$, $R_3$ to be detected by the object detection unit in at least one test image A' is then selected from the plurality of reference objects $R_1$, $R_2$, $R_3$ present in the scene based on the location of the imaging sensor in the map D and the distance of the imaging sensor to said reference objects $R_1$, $R_2$, $R_3$. As the location of the imaging sensor in the scene is provided to the diagnostic unit, the diagnostic unit can identify based on the map D which reference objects $R_1$, $R_2$, $R_3$ are depicted in an image A of the scene taken by the imaging sensor from its respective position $E_1$, $E_2$, $E_3$. In the example shown in fig. 7, the imaging sensor is localized at three consecutive positions $E_1$, $E_2$, $E_3$ and in each case the field of view $F_1$, $F_2$, $F_3$ is also localized by the geolocation unit.

Fig. 8 shows an example of an image A of the scene taken by the imaging sensor from position $E_3$ with the field of view $F_3$. In fig. 8, the rail tracks $T_3$ are visible in the center of the image A of the scene whereas two walking paths can be seen left and right of the rail tracks $T_3$ which are not included in the map D in fig. 6 because they are not relevant for the vehicle G.

As can be seen in fig. 7, the reference object $R_3$, an overhead railway signal which is included in map D in fig. 6 at position $P_3$, will be depicted in the image A of the scene taken by the imaging sensor at its position $E_3$. Fig. 8 shows that indeed the image A of the scene contains the image of an overhead railway signal with a ground point GP3.

The image A of the scene in fig. 8 taken by the imaging sensor is provided to the object detection unit as a test image A'. The object detection unit then detects detected objects B and their positions C and object types in the test image A'. With regard to the image of the scene A shown in fig. 8, the object detection unit detects several objects. Therefore, the following description focuses on the detected object $B_3$, an overhead railway signal, whose detected position $C_3$ and object type are compared with the known position $P_3$ and object type of reference object $R_3$.

In order to compare the detected position $C_3$ of the detected object $B_3$, an overhead railway signal, with the known position $P_3$ of the reference object $R_3$ in the map D, the ground point $GP_3$ of the detected object $B_3$ has to be determined first. In order to determine the ground point $GP_3$ of the detected object $B_3$, i.e. the overhead railway signal, the railway signal is first detected by the object detection unit. This means that the dimensions e.g. width or height of the detected object $B_3$ are determined and then prior knowledge about the signal dimensions and pole height are exploited in order to compare the ground position $GP_3$ of the signal in a bird's eye view, i.e. the detected position $C_3$ in fig. 9, with the known position $P_3$ in the map D. To achieve this, the image A of the scene is converted into an ortho-rectified image called bird's eye view using a perspective transformation estimated from rail track $T_3$ in fig. 8. Fig. 9 shows such a bird's eye view V of the image A of the scene in fig. 8.

The procedure to determine the ground position $GP_3$ of the detected object $B_3$ is described in European Patent application number 19179792.7 and presented in detail for the second embodiment in fig. 6 to 9 in the following:
Once the image A of the scene is provided to the object detection unit, a classification method is used in order to automatically detect rail track-regions and the signal-regions S. Rail tracks T can be detected either using classical approaches, e.g. described in Rui Fan and Naim Dahnoun "Real-Time Stereo Vision-Based Lane Detection System", 2018 or Han Ma et el. "Multiple Lane Detection Algorithm Based on Optimised Dense Disparity Map Estimation", 2018. Classical approaches usually first extract the edges or lines from the rail track-regions and then apply curve fitting to refine the rail tracks.

Alternatively, it is also possible to use machine learning algorithms, which e.g. train an end-to-end neural network to segment the rail tracks T from the background; such methods are known from the state of the art, in particular from Davy Neven, Bert De Brabandere, Stamatios Georgoulis, Marc Proesmans and Luc Van Gool "Towards End-to-End Lane Detection: an Instance Segmentation Approach", 2018 or Min Bai et el. "Deep Multi-Sensor Lane Detection", 2018.

In both cases a classification method is used in order to identify the regions corresponding to rail tracks T and the regions S corresponding to signals in the image A of the scene taken by the imaging sensor which is the test image A' in the second embodiment of the invention.

The position of the ground point $GP_3$ of the detected object $B_3$, i.e. the overhead railway signal in the field of view $F_3$ is estimated with respect to the image A of the scene. As many signals are mounted on poles, the ground point $GP_3$ is the point within the image A of the scene that shows the base point of the pole. More generally, a ground point GP is the point within the image A of the scene that depicts a surface point, which is directly underneath the respective detected object B, e.g. a signal, even if the signal is not mounted on a pole, but e.g. mounted on overhead infrastructure.

In order to determine the ground point $GP_3$ of the detected object $B_3$, the following prerequisites are typically needed. Firstly, the size, i.e. height and width, of the panels of the signals are known. If there are different types of signals available, said type has to be firstly estimated by the shape and/or content of the image region of the signal.

For instance, a typical kind of signal could have a rectangular panel of 1.4-meters height and 0.7-meters width. Moreover, the signal could typically be mounted in a height of 4.85-meters to 6.95-meters (see Fig. 8).

Moreover, it is assumed that the image sensor is mounted on the train in a manner that its z-axis is - at least approximately - aligned vertically, and its y-axis is - at least approximately - aligned horizontally.

The height $h_t$ and width $w_t$ of the image region $S_t$ of the signal can be obtained by different methods, such as detection of an axis-parallel bounding box, etc.

Alternatively, it is also possible to determine the pixel height $h_t$ and width $w_t$ of the signal's image region $S_t$ as follows: As already mentioned, the ratio r between the height and width of the panel of the signal are known initially, for instance in the above case 2:1. In the following, the number of pixels A corresponding to the signal's image region is counted. By using the relation area = $w_t \cdot h_t = w_t \cdot w_t \cdot r$ the pixel-width $w_t$ of the image region $S_t$ of the signal can be determined easily. Accordingly, the pixel height $h_t$ of said signal region $S_t$ can be determined.

As the pixel height $h_t$ corresponds to the known height $h_t$ of the signal, one can easily calculate the z-distance $d_t$ from the lower edge of an image region $S_t$ to the respective ground point $GP_3$. Given that the image region has a pixel-height of 56 px as well as the above specifications for signals the z-distance $d_t$ between the lower edge of the image region and the ground point $GP_3$ can be calculated as:

$$d_t = [4.85, 6.95] \text{ m} * 56 \text{ px} / 1.4 \text{ m} = [194, 278] \text{ px}.$$

This means, that the ground point $GP_3$ is at a position between 194 px and 278 px under the lower edge of the signal's image region $S_t$. To simplify calculations, an average pole height, for example of 6-meters can be used, which would lead to a z-distance $d_t$ of 240 px.

In order to define the ground point's $GP_3$ coordinates, one has to find the lower edge of the signal region $S_t$ as well as the horizontal center of the signal region $S_t$. The lower edge position $z_{l,t}$ can be defined as the highest or lowest z-position, depending on the orientation of the z-axis of the image sensor. The horizontal center $y_{m,t}$ of the signal region can be defined as the y-coordinate of the centroid of the signal region. The position of the ground point GP can generally be defined as:

$$GP = [y_{m,t}; z_{l,t} - d_t].$$

In general, the ground point GP can be determined by calculating an offset from an image position within the region of the signal, wherein the offset is defined by the size, in particular by a length on the region of the signal. For example, the ground point GP can be determined by calculating width and height of a rectangular bounding box that is parallel to the image axes.

There could be other possible ways to determine the ground point GP of a signal. For example, using the known gauge-width of the rail track and the signal panel's dimensions (i.e. real height and width), one could estimate the ground point of the signal in the two-dimensional image by comparing the signal panel's pixel-width to the gauge's pixel-width of the gauge of the rail track, both scaled in an appropriate manner. In order to determine correctly scaled pixel-heights and/or pixel-widths it is advantageous to consider the image's perspective distortion and the orientation of the rail tracks.

Even if the ground point $GP_3$ is now determined within the image A of the scene, i.e. the test image A', it is still not possible to compare this ground point position with the position $P_3$ of the reference object $R_3$ in the map D.

As described above, the position of a ground point $GP_3$ underneath the signal was estimated from the image A of the scene by projection of the signal within the image A of the scene to the ground plane.

Instead of a projection to a ground plane, it is also possible to use any other plane as projection plane. In this case the path of the selected rail track T and the position of the signals are projected into this plane.

For this reason, a perspective transformation H is determined, by which it is possible to transform the image A of the scene into the projection plane; as this projection plane is - in this very example - parallel to the ground plane, the transformation returns a bird's eye view image. As an example, the transformation H can be a perspective transformation, that is based on visual properties of the image and/or mounting properties of the imaging sensor.

One particular method to determine the transformation H is to find a trapezoidal region within the region of the actual rail track $T_3$. This trapezoidal region is represented in stippled lines in fig. 8. Based on the mounting properties of the image sensor and the assumption of a sufficiently flat and smooth track bed it is clear, that this trapezoidal region typically covers a rectangular region within a bird's eye view image. Even if the rail track is curved, there is a region close to the train, which is sufficiently straight, to obtain an approximate trapezoid structure. The perspective transformation is defined in such way, that it transforms at least a trapezoidal part of the region $T_3$ of the actual rail track to a rectangular region within the bird's eye view image. From this bird's eye view image, the detected position $C_3$ can be extracted for comparison with the known position $P_3$ in the map D.

If detected objects B which are positioned directly on the ground are detected in the test image A', a standard perspective transformation can be used to convert their coordinates from the image A of the scene, i.e. the test image A', to coordinates in a bird's eye view with origin at $E_1$, $E_2$, $E_3$ for comparison with known positions $P_1$, $P_2$, $P_3$ of reference objects $R_1$, $R_2$, $R_3$ in the map D of the scene shown in fig. 6.In the second embodiment described in connection with fig. 6 to 9, the object detection unit identifies a detected object $B_3$ at a position $C_3$ with some detection margin M' highlighted by the circle in Fig. 9 for slight deviations caused by the determination and transformation of the ground position $GP_3$ to the bird's eye view in the test image A'. As the detected position $C_3$ including its detection margin M' lies within the circular tolerance margin M of the known position $P_3$ of the reference object $R_3$ in map D, the diagnostic unit determines both positions to correspond.

In this context, a correct detection of the detected position C would also be determined by the diagnostic unit, if, e.g. a circular or ellipsoidal, detection margin M' of the detected position C intersects with, e.g. the circular or ellipsoidal, tolerance margin M of the known position P in a way that at least 50% of the detection margin M' lie within the tolerance margin M. This would be considered as a significant overlap in the context of the invention.

As the object type of the detected object $B_3$ in Fig. 8 is determined as "overhead railway signal" and the reference object $R_3$ is indeed an overhead railway signals, also the object types correspond. Therefore, the object detection unit is determined as reliable by the diagnostic unit in the second embodiment of the invention.

Of course, optionally also a whole catalogue of maps D may be stored in the diagnostic unit or a storage unit connected with the diagnostic unit and the diagnostic unit then identifies the location of the imaging sensor in the correct map D of the catalogue of maps D.

When selecting the reference objects $R_1$, $R_2$, $R_3$ which should be detected by the object detection unit in the test image A', the diagnostic unit may calculate the distance from the location $E_1$, $E_2$, $E_3$ of the imaging sensor provided by the geolocation unit to the reference objects $R_1$, $R_2$, $R_3$ included in the map D and select the closest on-coming reference object $R_1$, $R_2$, $R_3$ to be detected by the object detection unit. In this context the diagnostic unit may also additionally take traffic infrastructure into consideration that is used by the vehicle G such as rail tracks $T_1$, $T_2$, $T_3$ or roads. This means, for instance, when the vehicle G uses rail tracks $T_1$, $T_2$, $T_3$ no traffic signs intended for pedestrians are used as reference objects $R_1$, $R_2$, $R_3$.

As mentioned above, a method and a diagnostic unit according to the invention may be used in an imaging system comprising at least one imaging sensor, an object detection unit and a diagnostic unit for assessing the reliability of the object detection unit. Examples of such imaging sensors, object detection units and diagnostic units were described before. Of course, the imaging sensor may be an imaging sensor which is mounted in or on a vehicle G, preferably a train or a car, connected to the object detection unit and/or the diagnostic unit and is configured to take at least one image A of a scene.

Optionally, such an imaging system may also include a geolocation unit which is connected to the diagnostic unit and configured the determine the location of the imaging sensor, in particular the position $E_1$, $E_2$, $E_3$ and the field of view $F_1$, $F_2$, $F_3$ of the imaging sensor in a scene.

Of course, a method according to the invention may also include tests for assessing the correct functioning of the imaging sensor before assessing the reliability of the object detection unit. This means, before selecting the reference object R to be detected in the test image A', the correct functioning of the imaging sensor is tested, in particular by evaluating whether the imaging sensor is generating the configured number of images per second and/or pixel intensity values differ between any two consecutive images.

Alternatively or additionally, optical flow testing may be conducted by the diagnostic unit.

This means, in a sequence of images A of a scene provided by the imaging sensor, the distance between selected image content, e.g. selected detected objects B, is calculated in consecutive images. If the distance is below a threshold value of a maximum distance for the same object B detected in consecutive images A of the scene, the imaging sensor is determined to be functioning correctly.

**Claims**

1. Method for assessing the reliability of an object detection unit,
   programmed to detect images of objects (B) and their positions (C) and object types in two or three-dimensional images (A, A') provided to the object detection unit by using an object detection and/or a classification method, in particular a neural network, comprising the following steps:

   - a diagnostic unit selecting at least one reference object (R; $R_1$, $R_2$, $R_3$) with a known object type wherein the image of said reference object (R; $R_1$, $R_2$, $R_3$) is to be detected by the object detection unit,
   - the diagnostic unit providing at least one test image (A'), in particular in a predefined sequence of images and/or in a random way, to the object detection unit, wherein said test image (A') contains the image of the

reference object (R; $R_1$, $R_2$, $R_3$) at a known position (P; $P_1$, $P_2$, $P_3$),
- the diagnostic unit defining a tolerance margin (M) around the known position (P; $P_1$, $P_2$, $P_3$) of the reference object (R; $R_1$, $R_2$, $R_3$) for acceptable detection of the position of said reference object (R; $R_1$, $R_2$, $R_3$) in the test image (A'),
- detecting the image of at least one object (B) and its position (C) and object type in the test image (A') with the object detection unit,
- the diagnostic unit comparing the known position (P; $P_1$, $P_2$, $P_3$) and object type of the reference object (R; $R_1$, $R_2$, $R_3$) with the detected position (C) and object type of the detected object (B), and
- the diagnostic unit determining the object detection unit to be reliable if

  ○ the object type of the reference object (R; $R_1$, $R_2$, $R_3$) corresponds to the object type of the detected object (B) and
  ○ the detected position (C) of the detected object (B), in particular a detection margin (M') around the detected position (C), lies substantially within the before defined tolerance margin (M) around the known position (P; $P_1$, $P_2$, $P_3$) of the reference object (R; $R_1$, $R_2$, $R_3$).

2. Method according to claim 1,

   - wherein the test image (A') provided to the object detection unit is an, in particular modified, image (A) of a scene taken by an imaging sensor, in particular by an imaging sensor mounted in or on a vehicle (G), preferably a train or a car
   and/or
   - wherein, before selecting the reference object (R; $R_1$, $R_2$, $R_3$) to be detected in the test image (A'), the correct functioning of the imaging sensor is tested by evaluating whether the imaging sensor is generating the configured number of images per second and/or pixel intensity values differ between any two consecutive images.

3. Method according to claim 2, wherein the imaging sensor is configured to take sequences of images (A) of the scene,

   wherein said sequence of images (A) of the scene taken by the imaging sensor is provided to the object detection unit and
   wherein

   - the at least one test image (A') is inserted in the sequence of images (A) of the scene and/or
   - at least one image (A) of the scene out of the sequence is the test image (A') or is modified into the test image (A') and/or
   - at least one image (A) of the scene out of the sequence is exchanged for a test image (A').

4. Method according to any preceding claim,

   - wherein a catalogue of test images (A') is provided, wherein said test images (A') of the catalogue are single individual test images (A') and wherein the test image (A') provided to the object detection unit is selected from said catalogue of single test images (A').
   and/or
   - wherein a catalogue of sequences of images is provided,

     wherein a number of said images of the sequence are test images (A') containing the image of the reference object (R; $R_1$, $R_2$, $R_3$),
     wherein said number of test images (A') is included at predefined sequence positions in the sequence of test images (A') in the image catalogue,
     wherein a sequence of said images from the catalogue is provided to the object detection unit and
     wherein the object detection unit is determined to be reliable if additionally the sequence positions of the test images (A') containing a reference object (R; $R_1$, $R_2$, $R_3$) corresponds to the sequence positions of the images in which detected objects (B) were detected.

5. Method according to any of claims 1 to 3, wherein after selecting the reference object (R; $R_1$, $R_2$, $R_3$), the image of said reference object (R; $R_1$, $R_2$, $R_3$) is inserted at a predefined known position (P; $P_1$, $P_2$, $P_3$) in the test image (A'), in particular in the image (A) of the scene.

**6.** Method according to any preceding claim, in particular according to any of claims 1 to 3 or 5,

- wherein the reference object (R) is a standard object with a known shape, in particular a standard object with the shape of a human, a traffic signal or a car,
in particular wherein the reference object (R; $R_1$, $R_2$, $R_3$) is selected from a predefined catalogue of reference objects (R; $R_1$, $R_2$, $R_3$), wherein the catalogue of reference objects (R; $R_1$, $R_2$, $R_3$) includes a plurality of images of said reference objects (R; $R_1$, $R_2$, $R_3$) captured under different image acquisition conditions, in particular captured under varying viewing angles and/or weather conditions and/or lighting conditions and/or
- wherein the content, in particular the weather and/or lighting conditions and/or the orientation of structures of interest, preferably a rail track and/or a road, of the test image (A'), in particular the image (A) of the scene, is determined, in particular by using neural networks, and

wherein the reference object (R; $R_1$, $R_2$, $R_3$) is selected based on the determined content of said test image (A').

**7.** Method according to any of claims 2 to 6, in particular according to claim 2, 3 or 6,

- wherein at least one map (D) of the scene is provided, wherein said map (D) includes the positions (P; $P_1$, $P_2$, $P_3$) and object types of a plurality of reference objects (R; $R_1$, $R_2$, $R_3$) which can be captured in the image (A) of the scene by the imaging sensor from a predefined distance, in particular traffic signs and/or railway signals and/or traffic lights, and
- wherein the imaging sensor, in particular the position ($E_1$, $E_2$, $E_3$) and the field of view ($F_1$, $F_2$, $F_3$) of the imaging sensor, is localized in the scene,
- wherein the location of the imaging sensor in the scene is identified in the map (D), and
- wherein the reference object (R; $R_1$, $R_2$, $R_3$) to be detected in the test image (A') is selected from said plurality of reference objects (R; $R_1$, $R_2$, $R_3$) based on the location of the imaging sensor in the map (D) and the distance of the imaging sensor to said reference objects (R; $R_1$, $R_2$, $R_3$), in particular by selecting the closest on-coming reference object (R; $R_1$, $R_2$, $R_3$).

**8.** Method according to claim 7,

- wherein the imaging sensor is mounted in or on a vehicle (G), in particular a train or a car, and
- wherein a catalogue of maps (D) is provided, wherein the maps (D) additionally include traffic infrastructure that is used by the vehicle (G), in particular roads and/or rail tracks (T; $T_1$, $T_2$, $T_3$),

preferably wherein an on-coming reference object (R; $R_1$, $R_2$, $R_3$) associated with the traffic infrastructure the vehicle (G) is using is selected.

**9.** Diagnostic unit for assessing the reliability of an object detection unit,

- wherein the object detection unit is configured to receive image data, in particular in a predefined sequence of images and/or in a random way, in particular from the diagnostic unit and/or images (A) of a scene taken by an imaging sensor, and programmed

∘ to detect images of objects (B) and their positions (C) and object types in two- or three-dimensional images (A, A') provided to the object detection unit by using an object detection and/or a classification method, in particular a neural network, and
∘ to provide the detected position (C) and object type of the detected object (B) to the diagnostic unit, and

- wherein the diagnostic unit is connectable with the object detection unit and configured to receive data, in particular detected positions (C) and object types of detected objects (B), from the object detection unit, and to transmit at least one test image (A') to the object detection unit, and wherein the diagnostic unit is programmed to

∘ select at least one reference object (R; $R_1$, $R_2$, $R_3$) with a known position (P; $P_1$, $P_2$, $P_3$) and a known object type wherein the image of said reference object (R; $R_1$, $R_2$, $R_3$) is to be detected by the object detection unit, wherein the image of said reference object (R; $R_1$, $R_2$, $R_3$) is contained in the test image (A'),
∘ define a tolerance margin (M) around the known position (P; $P_1$, $P_2$, $P_3$) of the reference object (R; $R_1$, $R_2$, $R_3$) for acceptable detection of the position (P; $P_1$, $P_2$, $P_3$) of said reference object (R; $R_1$, $R_2$, $R_3$) in

the test image (A'),

o compare the known position (P; $P_1$, $P_2$, $P_3$) and object type of the reference object (R; $R_1$, $R_2$, $R_3$) with the detected position (C) and object type of the detected object (B) provided by the object detection unit, and

∘ determine the object detection unit to be reliable if

- the object type of the reference object (R; $R_1$, $R_2$, $R_3$) corresponds to the object type of the detected object (B) and
- the detected position (C) of the detected object (D), in particular a detection margin (M') around the detected position (C), lies substantially within the before defined tolerance margin (M) around the known position (P; $P_1$, $P_2$, $P_3$) of the reference object (R; $R_1$, $R_2$, $R_3$).

10. Diagnostic unit according to claim 9,

- **characterized in that** the diagnostic unit is configured to provide test images (A'), in particular, preferably modified, images (A) of a scene taken by an imaging sensor and/or test images (A') from a catalogue, to the object detection unit
and/or
- **characterized in that** the diagnostic unit is configured to

- insert the at least one test image (A') in a sequence of images (A) of a scene taken by an imaging sensor
and/or
- select at least one image (A) of the scene out of a sequence of images (A) of a scene taken by an imaging sensor as the test image (A') or to be modified into the test image (A') and/or
exchange at least one image (A) of the scene out of a sequence of images (A) of a scene taken by an imaging sensor for a test image (A')

and/or
- **characterized in that** the diagnostic unit is programmed to test the correct functioning of the imaging sensor before defining the reference object (R; $R_1$, $R_2$, $R_3$) to be detected in the image (A) of the scene by evaluating whether the imaging sensor is generating the configured number of frames per second and/or pixel intensity values differ between any two consecutive frames.

11. Diagnostic unit according to any of claims 9 or 10,

- **characterized in that** the diagnostic unit comprises a storage unit for a predefined catalogue of test images (A'), wherein said test images (A') of the catalogue are single individual test images (A') and
that the diagnostic unit is programmed to select at least one test image (A') from said catalogue of single test images (A') and provide it to the object detection unit.
and/or
- **characterized in**

- **that** the diagnostic unit comprises a storage unit for a predefined catalogue of sequences of images, wherein a number of said images of the sequence are test images (A') containing the image of the reference object (R; $R_1$, $R_2$, $R_3$) and wherein said number of test images (A') is included at predefined sequence positions in the sequence of test images (A') in the catalogue of test images (A')
- **that** the diagnostic unit is programmed

∘ to select and provide a sequence of said images from the catalogue to the object detection unit and
∘ to determine the object detection unit to be reliable if

- additionally the sequence positions of the test images (A') containing a reference object (R; $R_1$, $R_2$, $R_3$) corresponds to the sequence positions of the test images (A') in which the detected object (B) were detected.

12. Diagnostic unit according to any of claims 9 or 10, **characterized in that** the diagnostic unit is programmed, after selecting the reference object (R; $R_1$, $R_2$, $R_3$), to insert the image of said reference object (R; $R_1$, $R_2$, $R_3$), in particular a standard reference object with a known shape, at a predefined known position (P; $P_1$, $P_2$, $P_3$) in the test image (A'), in particular in the image (A) of the scene.

**13.** Diagnostic unit according to any of claims 9 to 12, in particular according to any of claims 9, 10 or 12,

- **characterized in**

- **that** the diagnostic unit comprises a storage unit for a predefined catalogue of reference objects (R; $R_1$, $R_2$, $R_3$) and
- **that** the diagnostic unit is programmed to select the reference object (R; $R_1$, $R_2$, $R_3$) from the predefined catalogue of reference objects (R; $R_1$, $R_2$, $R_3$),
wherein said catalogue of reference objects (R; $R_1$, $R_2$, $R_3$) includes a plurality of images of said reference objects (R; $R_1$, $R_2$, $R_3$) captured under different image acquisition conditions, in particular captured under varying viewing angles and/or weather conditions and/or lighting conditions.

and/or
- **characterized in that** the diagnostic unit is programmed

- to determine the content, in particular the weather and/or lighting conditions and/or the orientation of structures of interest, preferably a rail track and/or a road, of the test image (A'), in particular of the image (A) of the scene, preferably by using neural networks, and
- to select the reference object (R; $R_1$, $R_2$, $R_3$) based on the determined content of said test image (A').

**14.** Diagnostic unit according to any of claims 9 to 13, in particular to any of claims claim 9, 10 or 13, **characterized in**

- **that** the diagnostic unit is configured to receive location data from a geolocation unit,
- **that** the diagnostic unit comprises a storage unit for at least one map (D) of the scene and
- **that** the diagnostic unit is programmed

∘ to find a location, in particular a location of an imaging sensor, provided to the diagnostic unit within the map (D) of the scene, wherein said map (D) includes the positions (P; $P_1$, $P_2$, $P_3$) and object types of a plurality of reference objects (R; $R_1$, $R_2$, $R_3$) which can be captured in an image (A) of the scene from a predefined distance, in particular traffic signs and/or railway signals and/or traffic lights, and
∘ to select the reference object (R; $R_1$, $R_2$, $R_3$) to be detected in the test image (A') from said plurality of reference objects (R; $R_1$, $R_2$, $R_3$) based on the location, in particular the location of the imaging sensor, in the scene and the map (D) of the scene,
∘ in particular to select an on-coming reference object (P; $P_1$, $P_2$, $P_3$).

**15.** Diagnostic unit according to claim 14, **characterized in that** the diagnostic unit is programmed

∘ to find the location, in particular the location of the imaging sensor, provided to the diagnostic unit within a catalogue of maps (D) which is stored in the storage unit, wherein the maps (D) additionally include traffic infrastructure for use by vehicles (G), in particular roads and/or rail tracks (T; $T_1$, $T_2$, $T_3$), and
∘ preferably to select an on-coming reference object (R; $R_1$, $R_2$, $R_3$) associated with the traffic infrastructure the location, in particular the location of the imaging sensor, provided to the diagnostic unit is associated with.

**16.** Imaging system comprising at least one imaging sensor, an object detection unit and a diagnostic unit for assessing the reliability of the object detection unit,

- wherein the imaging sensor, in particular an imaging sensor mounted in or on a vehicle (G), preferably a train or a car, is configured to take at least one image (A) of a scene,
- wherein the object detection unit is configured to receive image data, in particular in a predefined sequence of images and/or in a random way, in particular from the diagnostic unit and/or images (A) of a scene taken by an imaging sensor, and programmed

∘ to detect images of objects (B) and their positions (C) and object types in two- or three-dimensional images (A, A') provided to the object detection unit by using an object detection and/or a classification method, in particular a neural network, and
∘ to provide the detected position (C) and object type of the detected object (B) to the diagnostic unit, and

- wherein the imaging system comprises a diagnostic unit according to any of claims 9 to 15, in particular wherein the diagnostic unit is connected to the imaging sensor.

**17.** Imaging system according to claim 16,

    - **characterized in that** the imaging system comprises a geolocation unit connected to the diagnostic unit, wherein the geolocation unit is configured to determine the location of the imaging sensor, in particular the position $(E_1, E_2, E_3)$ and the field of view $(F_1, F_2, F_3)$ of the imaging sensor, in a scene.
and/or
    - **characterized in that** the imaging sensor is configured to take sequences of images (A) of a scene.


**Patentansprüche**

**1.** Verfahren zum Beurteilen der Zuverlässigkeit einer Objekterfassungseinheit, programmiert um Bilder von Objekten (B) und deren Positionen (C) und Objekttypen in zwei- oder dreidimensionalen Bildern (A, A'), die von der Objekterfassungseinheit bereitgestellt werden, unter Verwendung eines Objekterfassungs- und/oder eines Klassifizierungsverfahrens, insbesondere eines neuronalen Netzwerks, zu erfassen, umfassend die folgenden Schritte:

    - eine Diagnoseeinheit, die zumindest ein Referenzobjekt $(R; R_1, R_2, R_3)$ mit einem bekannten Objekttyp auswählt, wobei das Bild des Referenzobjekts $(R; R_1, R_2, R_3)$ von der Objekterfassungseinheit zu erfassen ist,
    - die Diagnoseeinheit, die zumindest ein Testbild (A') insbesondere in einer vordefinierten Abfolge von Bildern und/oder auf eine zufällige Weise an die Objekterfassungseinheit bereitstellt, wobei das Testbild (A') das Bild des Referenzobjekts $(R; R_1, R_2, R_3)$ bei einer bekannten Position $(P; P_1, P_2, P_3)$ enthält,
    - die Diagnoseeinheit, die eine Toleranzspanne (M) um die bekannte Position $(P; P_1, P_2, P_3)$ des Referenzobjekts $(R; R_1, R_2, R_3)$ zur akzeptablen Erfassung der Position des Referenzobjekts $(R; R_1, R_2, R_3)$ in dem Testbild (A') definiert,
    - Erfassen des Bilds von zumindest einem Objekt (B) und dessen Position (C) und Objekttyp in dem Testbild (A') mit der Objekterfassungseinheit,
    - die Diagnoseeinheit, die die bekannte Position $(P; P_1, P_2, P_3)$ und den Objekttyp des Referenzobjekts $(R; R_1, R_2, R_3)$ mit der erfassten Position (C) und dem Objekttyp des erfassten Objekts (B) vergleicht, und
    - die Diagnoseeinheit, die die die Objekterfassungseinheit als zuverlässig bestimmt, falls

        ∘ der Objekttyp des Referenzobjekts $(R; R_1, R_2, R_3)$ dem Objekttyp des erfassten Objekts (B) entspricht und
        ∘ die erfasste Position (C) des erfassten Objekts (B), insbesondere eine Erfassungsspanne (M') um die erfasste Position (C), im Wesentlichen innerhalb der zuvor definierten Toleranzspanne (M) um die bekannte Position $(P; P_1, P_2, P_3)$ des Referenzobjekts $(R; R_1, R_2, R_3)$ liegt.

**2.** Verfahren nach Anspruch 1,

    - wobei das an die Objekterfassungseinheit bereitgestellte Testbild (A') ein, insbesondere modifiziertes, Bild (A) einer von einem Bildsensor aufgenommenen Szene ist, insbesondere von einem Bildsensor, der in oder auf einem Fahrzeug (G), bevorzugt einem Zug oder einem Auto, montiert ist,
und/oder
    - wobei vor Auswählen des in dem Testbild (A') zu erfassenden Referenzobjekts $(R; R_1, R_2, R_3)$ die korrekte Funktion des Bildsensors getestet wird, indem ermittelt wird, ob der Bildsensor die konfigurierte Anzahl von Bildern pro Sekunde erzeugt und/oder Pixelintensitätswerte sich zwischen beliebigen zwei aufeinanderfolgenden Bildern unterscheiden.

**3.** Verfahren nach Anspruch 2, wobei der Bildsensor konfiguriert ist, Abfolgen von Bildern (A) der Szene aufzunehmen,

    wobei die Abfolge von Bildern (A) der Szene, die von dem Bildsensor aufgenommen wird, an die Objekterfassungseinheit bereitgestellt wird und
    wobei

    - das zumindest eine Testbild (A') in die Abfolge von Bildern (A) der Szene eingesetzt wird und/oder
    - zumindest ein Bild (A) der Szene aus der Abfolge das Testbild (A') ist oder zu dem Testbild (A') modifiziert wird und/oder
    - zumindest ein Bild (A) der Szene aus der Abfolge durch ein Testbild (A') ausgetauscht wird.

**4.** Verfahren nach einem vorstehenden Anspruch,

- wobei ein Katalog von Testbildern (A') bereitgestellt wird, wobei die Testbilder (A') des Katalogs einzelne individuelle Testbilder (A') sind und wobei das an die Objekterfassungseinheit bereitgestellte Testbild (A') aus dem Katalog von einzelnen Testbildern (A') ausgewählt wird,
und/oder
- wobei ein Katalog von Abfolgen von Bildern bereitgestellt wird,

wobei eine Anzahl der Bilder der Abfolge Testbilder (A') sind, die das Bild des Referenzobjekts (R; $R_1$, $R_2$, $R_3$) enthalten,
wobei die Anzahl von Testbildern (A') bei vordefinierten Abfolgepositionen in der Abfolge von Testbildern (A') in dem Bildkatalog beinhaltet ist,
wobei eine Abfolge der Bilder von dem Katalog der Objekterfassungseinheit bereitgestellt wird und
wobei die Objekterfassungseinheit als zuverlässig bestimmt wird, falls zusätzlich die Abfolgepositionen der Testbilder (A'), die ein Referenzobjekt (R; $R_1$, $R_2$, $R_3$) enthalten, den Abfolgepositionen der Bilder entsprechen, in denen die erfassten Objekte (B) erfasst wurden.

**5.** Verfahren nach einem der Ansprüche 1 bis 3, wobei nach Auswählen des Referenzobjekts (R; $R_1$, $R_2$, $R_3$) das Bild des Referenzobjekts (R; $R_1$, $R_2$, $R_3$) bei einer vordefinierten bekannten Position (P; $P_1$, $P_2$, $P_3$) in dem Testbild (A') eingesetzt wird, insbesondere in das Bild (A) der Szene.

**6.** Verfahren nach einem vorstehenden Anspruch, insbesondere nach einem der Ansprüche 1 bis 3 oder 5,

- wobei das Referenzobjekt (R) ein Standardobjekt mit einer bekannten Form, insbesondere ein Standardobjekt mit der Form eines Menschen, eines Verkehrssignals oder eines Autos ist,
insbesondere wobei das Referenzobjekt (R; $R_1$, $R_2$, $R_3$) aus einem vordefinierten Katalog von Referenzobjekten (R; $R_1$, $R_2$, $R_3$) ausgewählt wird, wobei der Katalog von Referenzobjekten (R; $R_1$, $R_2$, $R_3$) eine Vielzahl von Bildern der Referenzobjekte (R; $R_1$, $R_2$, $R_3$) beinhaltet, die unter unterschiedlichen Bildaufnahmebedingungen aufgenommen wurden, insbesondere unter verschiedenen Blickwinkeln und/oder Wetterbedingungen und/oder Lichtbedingungen aufgenommen wurden,
und/oder
- wobei der Inhalt, insbesondere das Wetter und/oder Lichtbedingungen und/oder die Ausrichtung von Strukturen von Interesse, bevorzugt ein Bahngleis und/oder eine Straße, des Testbilds (A'), insbesondere des Bilds (A) der Szene, insbesondere unter Verwendung neuronaler Netzwerke, bestimmt wird, und

wobei das Referenzobjekt (R; $R_1$, $R_2$, $R_3$) basierend auf dem bestimmten Inhalt des Testbilds (A') ausgewählt wird.

**7.** Verfahren nach einem der Ansprüche 2 bis 6, insbesondere nach Anspruch 2, 3 oder 6,

- wobei zumindest eine Karte (D) der Szene bereitgestellt wird, wobei die Karte (D) die Positionen (P; $P_1$, $P_2$, $P_3$) und Objekttypen einer Vielzahl von Referenzobjekten (R; $R_1$, $R_2$, $R_3$) beinhaltet, die in dem Bild (A) der Szene durch den Bildsensor aus einer vordefinierten Distanz aufgenommen werden können, insbesondere Verkehrszeichen und/oder Schienensignale und/oder Verkehrsampeln, und
- wobei der Bildsensor, insbesondere die Position ($E_1$, $E_2$, $E_3$) und das Blickfeld ($F_1$, $F_2$, $F_3$) des Bildsensors, in der Szene liegt,
- wobei die Stelle des Bildsensors in der Szene in der Karte (D) identifiziert ist, und - wobei das in dem Testbild (A') zu erfassende Referenzobjekt (R; $R_1$, $R_2$, $R_3$) aus der Vielzahl von Referenzobjekten (R; $R_1$, $R_2$, $R_3$) basierend auf der Stelle des Bildsensors in der Karte (D) und der Distanz des Bildsensors von den Referenzobjekten (R; $R_1$, $R_2$, $R_3$) ausgewählt wird, insbesondere indem das nächste herannahende Referenzobjekt (R; $R_1$, $R_2$, $R_3$) ausgewählt wird.

**8.** Verfahren nach Anspruch 7,

- wobei der Bildsensor in oder auf einem Fahrzeug (G), insbesondere einem Zug oder einem Auto, montiert ist, und
- wobei ein Katalog von Karten (D) bereitgestellt wird, wobei die Karten (D) zusätzlich Verkehrsinfrastruktur beinhalten, die von dem Fahrzeug (G) verwendet wird, insbesondere Straßen und/oder Bahngleise (T; $T_1$, $T_2$, $T_3$),

wobei bevorzugt ein herannahendes Referenzobjekt (R; $R_1$, $R_2$, $R_3$), das mit der von dem Fahrzeug (G) verwendeten Verkehrsinfrastruktur verknüpft ist, ausgewählt wird.

9.  Diagnoseeinheit zum Beurteilen der Zuverlässigkeit einer Objekterfassungseinheit,

    - wobei die Objekterfassungseinheit konfiguriert ist, Bilddaten, insbesondere in einer vordefinierten Abfolge von Bildern und/oder auf eine zufällige Weise, insbesondere von der Diagnoseeinheit und/oder von einem Bildsensor aufgenommene Bilder (A) einer Szene zu empfangen, und programmiert ist

        ◦ Bilder von Objekten (B) und deren Positionen (C) und Objekttypen in zwei- oder dreidimensionalen Bildern (A, A'), die von der Objekterfassungseinheit bereitgestellt werden, unter Verwendung eines Objekterfassungs- und/oder eines Klassifizierungsverfahrens, insbesondere eines neuronalen Netzwerks, zu erfassen und
        ◦ die erfasste Position (C) und den Objekttyp des erfassten Objekts (B) an die Diagnoseeinheit bereitzustellen, und

    - wobei die Diagnoseeinheit mit der Objekterfassungseinheit verbindbar ist und konfiguriert ist, Daten, insbesondere erfasste Positionen (C) und Objekttypen erfasster Objekte (B), von der Objekterfassungseinheit zu empfangen und zumindest ein Testbild (A') an die Objekterfassungseinheit zu übertragen, und wobei die Diagnoseeinheit programmiert ist

        ◦ ein Referenzobjekt (R; $R_1$, $R_2$, $R_3$) mit einer bekannten Position (P; $P_1$, $P_2$, $P_3$) und einem bekannten Objekttyp auszuwählen, wobei das Bild des Referenzobjekts (R; $R_1$, $R_2$, $R_3$) von der Objekterfassungseinheit zu erfassen ist, wobei das Bild des Referenzobjekts (R; $R_1$, $R_2$, $R_3$) in dem Testbild (A') enthalten ist,
        ◦ eine Toleranzspanne (M) um die bekannte Position (P; $P_1$, $P_2$, $P_3$) des Referenzobjekts (R; $R_1$, $R_2$, $R_3$) zur akzeptablen Erfassung der Position (P; $P_1$, $P_2$, $P_3$) des Referenzobjekts (R; $R_1$, $R_2$, $R_3$) in dem Testbild (A') zu definieren,
        ◦ die bekannte Position (P; $P_1$, $P_2$, $P_3$) und den Objekttyp des Referenzobjekts (R; $R_1$, $R_2$, $R_3$) mit der erfassten Position (C) und dem Objekttyp des erfassten Objekts (B) zu vergleichen, die von der Objekterfassungseinheit bereitgestellt werden, und
        ◦ die Objekterfassungseinheit als zuverlässig zu bestimmen, falls

            - der Objekttyp des Referenzobjekts (R; $R_1$, $R_2$, $R_3$) dem Objekttyp des erfassten Objekts (B) entspricht und
            - die erfasste Position (C) des erfassten Objekts (D), insbesondere eine Erfassungsspanne (M') um die erfasste Position (C), im Wesentlichen innerhalb der zuvor definierten Toleranzspanne (M) um die bekannte Position (P; $P_1$, $P_2$, $P_3$) des Referenzobjekts (R; $R_1$, $R_2$, $R_3$) liegt.

10. Diagnoseeinheit nach Anspruch 9,

    - **dadurch gekennzeichnet, dass** die Diagnoseeinheit konfiguriert ist, Testbilder (A'), insbesondere von einem Bildsensor aufgenommene, bevorzugt modifizierte, Bilder (A) einer Szene und/oder Testbilder (A') aus einem Katalog an die Objekterfassungseinheit bereitzustellen,
    und/oder
    - **dadurch gekennzeichnet, dass** die Diagnoseeinheit für Folgendes konfiguriert ist

        - Einsetzen des zumindest einen Testbilds (A') in eine Abfolge von Bildern (A) einer Szene, die von einem Bildsensor aufgenommen werden, und/oder
        - Auswählen zumindest eines Bilds (A) der Szene aus einer Abfolge von Bildern (A) einer Szene, die von einem Bildsensor aufgenommen werden, als das Testbild (A') oder als jenes, das zu dem Testbild (A') zu modifizieren ist, und/oder Austauschen zumindest eines Bilds (A) der Szene aus einer Abfolge von Bildern (A) einer Szene, die von einem Bildsensor aufgenommen wird, durch ein Testbild (A')

    und/oder
    - **dadurch gekennzeichnet, dass** die Diagnoseeinheit programmiert ist, die korrekte Funktion des Bildsensors zu testen, bevor das in dem Bild (A) der Szene zu erfassende Referenzobjekt (R; $R_1$, $R_2$, $R_3$) definiert wird, indem ermittelt wird, ob der Bildsensor die konfigurierte Anzahl von Frames pro Sekunde erzeugt und/oder Pixelintensitätswerte sich zwischen beliebigen zwei aufeinanderfolgenden Frames unterscheiden.

11. Diagnoseeinheit nach einem der Ansprüche 9 oder 10,

- **dadurch gekennzeichnet, dass** die Diagnoseeinheit eine Speichereinheit für einen vordefinierten Katalog von Testbildern (A') umfasst, wobei die Testbilder (A') des Katalogs einzelne individuelle Testbilder (A') sind und
- dass die Diagnoseeinheit programmiert ist, zumindest ein Testbild (A') aus dem Katalog einzelner Testbilder (A') auszuwählen und es an die Objekterfassungseinheit bereitzustellen;
und/oder
- **dadurch gekennzeichnet,**

- **dass** die Diagnoseeinheit eine Speichereinheit für einen vordefinierten Katalog von Abfolgen von Bildern umfasst, wobei eine Anzahl der Bilder der Abfolge Testbilder (A') sind, die das Bild des Referenzobjekts (R; $R_1$, $R_2$, $R_3$) enthalten und wobei die Anzahl von Testbildern (A') bei vordefinierten Abfolgepositionen in der Abfolge von Testbildern (A') in dem Katalog von Testbildern (A') enthalten ist,
- **dass** die Diagnoseeinheit programmiert ist,

○ eine Abfolge der Bilder aus dem Katalog auszuwählen und an die Objekterfassungseinheit bereitzustellen und
○ die Objekterfassungseinheit als zuverlässig zu ermitteln, falls

- zusätzlich die Abfolgepositionen der Testbilder (A'), die ein Referenzobjekt (R; $R_1$, $R_2$, $R_3$) enthalten, den Abfolgepositionen der Testbilder (A') entsprechen, in denen das erfasste Objekt (B) erfasst wurde.

12. Diagnoseeinheit nach einem der Ansprüche 9 oder 10, **dadurch gekennzeichnet, dass** die Diagnoseeinheit programmiert ist, nach Auswählen des Referenzobjekts (R; $R_1$, $R_2$, $R_3$) das Bild des Referenzobjekts (R; $R_1$, $R_2$, $R_3$), insbesondere eines Standardreferenzobjekts mit einer bekannten Form, bei einer vordefinierten bekannten Position (P; $P_1$, $P_2$, $P_3$) in das Testbild (A'), insbesondere in das Bild (A) der Szene, einzusetzen.

13. Diagnoseeinheit nach einem der Ansprüche 9 bis 12, insbesondere nach einem der Ansprüche 9, 10 oder 12,

- **dadurch gekennzeichnet,**

- **dass** die Diagnoseeinheit eine Speichereinheit für einen vordefinierten Katalog von Referenzobjekten (R; $R_1$, $R_2$, $R_3$) umfasst, und
- **dass** die Diagnoseeinheit programmiert ist, das Referenzobjekt (R; $R_1$, $R_2$, $R_3$) aus dem vordefinierten Katalog von Referenzobjekten (R; $R_1$, $R_2$, $R_3$) auszuwählen, wobei der Katalog von Referenzobjekten (R; $R_1$, $R_2$, $R_3$) eine Vielzahl von Bildern der Referenzobjekte (R; $R_1$, $R_2$, $R_3$) beinhaltet, die unter unterschiedlichen Bildaufnahmebedingungen aufgenommen wurden, insbesondere unter verschiedenen Blickwinkeln und/oder Wetterbedingungen und/oder Lichtbedingungen aufgenommen wurden,

und/oder
- **dadurch gekennzeichnet, dass** die Diagnoseeinheit programmiert ist,

- den Inhalt, insbesondere das Wetter und/oder Lichtbedingungen und/oder die Ausrichtung von Strukturen von Interesse, bevorzugt ein Bahngleis und/oder eine Straße, des Testbilds (A'), insbesondere des Bilds (A) der Szene, bevorzugt unter Verwendung neuronaler Netzwerke, zu bestimmen, und
- das Referenzobjekt (R; $R_1$, $R_2$, $R_3$) basierend auf dem bestimmten Inhalt des Testbilds (A') auszuwählen.

14. Diagnoseeinheit nach einem der Ansprüche 9 bis 13, insbesondere nach einem der Ansprüche Anspruch 9, 10 oder 13, **dadurch gekennzeichnet,**

- **dass** die Diagnoseeinheit konfiguriert ist, Standortdaten von einer Geolokalisierungseinheit zu empfangen,
- **dass** die Diagnoseeinheit eine Speichereinheit für zumindest eine Karte (D) der Szene umfasst und
- **dass** die Diagnoseeinheit programmiert ist,

○ einen Standort, insbesondere einen Standort eines Bildsensors, zu finden, der der Diagnoseeinheit innerhalb der Karte (D) der Szene bereitgestellt wird, wobei die Karte (D) die Positionen (P; $P_1$, $P_2$, $P_3$) und Objekttypen einer Vielzahl von Referenzobjekten (R; $R_1$, $R_2$, $R_3$) beinhaltet, die in einem Bild (A) der Szene aus einer vordefinierten Distanz aufgenommen werden können, insbesondere Verkehrszeichen und/oder Bahnsignale und/oder Verkehrsampeln, und

◦ das in dem Testbild (A') zu erfassende Referenzobjekt (R; $R_1$, $R_2$, $R_3$) aus der Vielzahl von Referenzobjekten (R; $R_1$, $R_2$, $R_3$) basierend auf dem Standort, insbesondere dem Standort des Bildsensors, in der Szene und der Karte (D) der Szene auszuwählen,

◦ insbesondere ein herannahendes Referenzobjekt (P; $P_1$, $P_2$, $P_3$) auszuwählen.

**15.** Diagnoseeinheit nach Anspruch 14, **dadurch gekennzeichnet, dass** die Diagnoseeinheit programmiert ist,

◦ den Standort, insbesondere den Standort des Bildsensors, der an die Diagnoseeinheit bereitgestellt wird, innerhalb eines Katalogs von Karten (D) zu finden, die in der Speichereinheit gespeichert sind, wobei die Karten (D) zusätzlich Verkehrsinfrastruktur zur Verwendung durch Fahrzeuge (G) beinhalten, insbesondere Straßen und/oder Bahngleise (T; $T_1$, $T_2$, $T_3$), und

◦ bevorzugt ein herannahendes Referenzobjekt (R; $R_1$, $R_2$, $R_3$) auszuwählen, das mit der Verkehrsinfrastruktur verknüpft ist, mit der der an die Diagnoseeinheit bereitgestellte Standort, insbesondere der Standort des Bildsensors, verknüpft ist.

**16.** Abbildungssystem, das zumindest einen Bildsensor, eine Objekterfassungseinheit und eine Diagnoseeinheit zum Beurteilen der Zuverlässigkeit der Objekterfassungseinheit umfasst,

- wobei der Bildsensor, insbesondere ein Bildsensor, der in oder auf einem Fahrzeug (G), bevorzugt einem Zug oder einem Auto, montiert ist, konfiguriert ist, zumindest ein Bild (A) einer Szene aufzunehmen,

- wobei die Objekterfassungseinheit konfiguriert ist, Bilddaten, insbesondere in einer vordefinierten Abfolge von Bildern und/oder auf eine zufällige Weise, insbesondere von der Diagnoseeinheit und/oder von einem Bildsensor aufgenommene Bilder (A) einer Szene zu empfangen, und programmiert ist

◦ Bilder von Objekten (B) und deren Positionen (C) und Objekttypen in zwei- oder dreidimensionalen Bildern (A, A'), die von der Objekterfassungseinheit bereitgestellt werden, unter Verwendung eines Objekterfassungs- und/oder eines Klassifizierungsverfahrens, insbesondere eines neuronalen Netzwerks, zu erfassen und

◦ die erfasste Position (C) und den Objekttyp des erfassten Objekts (B) an die Diagnoseeinheit bereitzustellen, und

- wobei das Abbildungssystem eine Diagnoseeinheit nach einem der Ansprüche 9 bis 15 umfasst, insbesondere wobei die Diagnoseeinheit mit dem Bildsensor verbunden ist.

**17.** Abbildungssystem nach Anspruch 16,

- **dadurch gekennzeichnet, dass** das Abbildungssystem eine Geolokalisierungseinheit umfasst, die mit der Diagnoseeinheit verbunden ist, wobei die Geolokalisierungseinheit konfiguriert ist, den Standort des Bildsensors, insbesondere die Position ($E_1$, $E_2$, $E_3$) und das Blickfeld ($F_1$, $F_2$, $F_3$) des Bildsensors, in einer Szene zu bestimmen,
und/oder
- **dadurch gekennzeichnet, dass** der Bildsensor konfiguriert ist, Abfolgen von Bildern (A) einer Szene aufzunehmen.

## Revendications

**1.** Procédé d'évaluation de la fiabilité d'une unité de détection d'objets, programmée pour détecter des images d'objets (B) et leurs positions (C) et leurs types d'objets dans des images bidimensionnelles ou tridimensionnelles (A, A') fournies à l'unité de détection d'objets en utilisant une détection d'objets et/ou un procédé de classification, en particulier un réseau de neurones, comprenant les étapes suivantes :

- une unité de diagnostic sélectionne au moins un objet de référence (R ; $R_1$, $R_2$, $R_3$) avec un type d'objet connu dans lequel l'image dudit objet de référence (R ; $R_1$, $R_2$, $R_3$) doit être détectée par l'unité de détection d'objets,
- l'unité de diagnostic fournit au moins une image de test (A'), en particulier dans une séquence prédéfinie d'images et/ou d'une manière aléatoire, à l'unité de détection d'objets, dans lequel ladite image de test (A') contient l'image de l'objet de référence (R ; $R_1$, $R_2$, $R_3$) à une position connue (P ; $P_1$, $P_2$, $P_3$),
- l'unité de diagnostic définit une marge de tolérance (M) autour de la position connue (P ; $P_1$, $P_2$, $P_3$) de l'objet de référence (R ; $R_1$, $R_2$, $R_3$) pour une détection acceptable de la position dudit objet de référence (R ; $R_1$, $R_2$, $R_3$) dans l'image de test (A'),
- une détection de l'image d'au moins un objet (B) et de sa position (C) et son type d'objet dans l'image de test (A') avec l'unité de détection d'objets,
- l'unité de diagnostic compare la position connue (P ; $P_1$, $P_2$, $P_3$) et le type d'objet de l'objet de référence (R ; $R_1$, $R_2$, $R_3$) avec la position détectée (C) et le type d'objet de l'objet détecté (B), et
- l'unité de diagnostic détermine que l'unité de détection d'objets est fiable si

∘ le type d'objet de l'objet de référence (R ; $R_1$, $R_2$, $R_3$) correspond au type d'objet de l'objet détecté (B) et
∘ la position détectée (C) de l'objet détecté (B), en particulier une marge de détection (M') autour de la position détectée (C), se trouve sensiblement dans la marge de tolérance (M) définie auparavant autour de la position connue (P ; $P_1$, $P_2$, $P_3$) de l'objet de référence (R ; $R_1$, $R_2$, $R_3$).

2. Procédé selon la revendication 1,

- dans lequel l'image de test (A') fournie à l'unité de détection d'objets est une image (A), en particulier modifiée, d'une scène prise par un capteur d'imagerie, en particulier par un capteur d'imagerie monté dans ou sur un véhicule (G), de préférence un train ou une voiture
et/ou
- dans lequel, avant la sélection de l'objet de référence (R ; $R_1$, $R_2$, $R_3$) devant être détecté dans l'image de test (A'), le fonctionnement correct du capteur d'imagerie est testé en évaluant si le capteur d'imagerie génère le nombre configuré d'images par seconde et/ou des valeurs d'intensité de pixels diffèrent entre deux images consécutives.

3. Procédé selon la revendication 2, dans lequel le capteur d'imagerie est configuré pour prendre des séquences d'images (A) de la scène,

dans lequel ladite séquence d'images (A) de la scène prise par le capteur d'imagerie est fournie à l'unité de détection d'objets et
dans lequel

- la au moins une image de test (A') est insérée dans la séquence d'images (A) de la scène et/ou
- au moins une image (A) de la scène dans la séquence est l'image de test (A') ou est modifiée en image de test (A') et/ou
- au moins une image (A) de la scène dans la séquence est échangée contre une image de test (A').

4. Procédé selon une quelconque revendication précédente,

- dans lequel un catalogue d'images de test (A') est fourni, dans lequel lesdites images de test (A') du catalogue sont des images de test individuelles uniques (A') et dans lequel l'image de test (A') fournie à l'unité de détection d'objets est sélectionnée dans ledit catalogue d'images de test uniques (A'),
et/ou
- dans lequel un catalogue de séquences d'images est fourni,

dans lequel un nombre desdites images de la séquence sont des images de test (A') contenant l'image de l'objet de référence (R ; $R_1$, $R_2$, $R_3$),
dans lequel ledit nombre d'images de test (A') est inclus à des positions de séquence prédéfinies dans la séquence d'images de test (A') dans le catalogue d'images,
dans lequel une séquence desdites images provenant du catalogue est fournie à l'unité de détection d'objets et
dans lequel l'unité de détection d'objets est déterminée comme étant fiable si en plus les positions de séquence des images de test (A') contenant un objet de référence (R ; $R_1$, $R_2$, $R_3$) correspondent aux positions de séquence des images dans lesquelles des objets détectés (B) ont été détectés.

5. Procédé selon l'une quelconque des revendications 1 à 3, dans lequel après la sélection de l'objet de référence (R ; $R_1$, $R_2$, $R_3$), l'image dudit objet de référence (R ; $R_1$, $R_2$, $R_3$) est insérée à une position connue prédéfinie (P ;

$P_1$, $P_2$, $P_3$) dans l'image de test (A'), en particulier dans l'image (A) de la scène.

6. Procédé selon une quelconque revendication précédente, en particulier selon l'une quelconque des revendications 1 à 3 ou 5,

- dans lequel l'objet de référence (R) est un objet standard avec une forme connue, en particulier un objet standard avec la forme d'un humain, d'un feu de signalisation ou d'une voiture,
en particulier dans lequel l'objet de référence (R ; $R_1$, $R_2$, $R_3$) est sélectionné à partir d'un catalogue prédéfini d'objets de référence (R ; $R_1$, $R_2$, $R_3$), dans lequel le catalogue d'objets de référence (R ; $R_1$, $R_2$, $R_3$) inclut une pluralité d'images desdits objets de référence (R ; $R_1$, $R_2$, $R_3$) capturées dans différentes conditions d'acquisition d'images, en particulier capturées sous des angles de prise de vue et/ou des conditions météorologiques et/ou des conditions d'éclairage variables
et/ou
- dans lequel le contenu, en particulier la météo et/ou des conditions d'éclairage et/ou l'orientation de structures d'intérêt, de préférence une voie ferrée et/ou une route, de l'image de test (A'), en particulier l'image (A) de la scène, est déterminé, en particulier en utilisant des réseaux de neurones, et

dans lequel l'objet de référence (R ; $R_1$, $R_2$, $R_3$) est sélectionné sur la base du contenu déterminé de ladite image de test (A').

7. Procédé selon l'une quelconque des revendications 2 à 6, en particulier selon la revendication 2, 3 ou 6,

- dans lequel au moins une carte (D) de la scène est fournie, dans lequel ladite carte (D) inclut les positions (P ; $P_1$, $P_2$, $P_3$) et les types d'objets d'une pluralité d'objets de référence (R ; $R_1$, $R_2$, $R_3$) qui peuvent être capturés dans l'image (A) de la scène par le capteur d'imagerie depuis une distance prédéfinie, en particulier des panneaux de signalisation et/ou des signaux ferroviaires et/ou des feux de circulation, et
- dans lequel le capteur d'imagerie, en particulier la position ($E_1$, $E_2$, $E_3$) et le champ de vision ($F_1$, $F_2$, $F_3$) du capteur d'imagerie, est localisé dans la scène,
- dans lequel l'emplacement du capteur d'imagerie dans la scène est identifié dans la carte (D), et
- dans lequel l'objet de référence (R ; $R_1$, $R_2$, $R_3$) devant être détecté dans l'image de test (A') est sélectionné dans ladite pluralité d'objets de référence (R ; $R_1$, $R_2$, $R_3$) sur la base de l'emplacement du capteur d'imagerie dans la carte (D) et de la distance du capteur d'imagerie par rapport auxdits objets de référence (R ; $R_1$, $R_2$, $R_3$), en particulier en sélectionnant l'objet de référence venant en sens inverse le plus proche (R ; $R_1$, $R_2$, $R_3$).

8. Procédé selon la revendication 7,

- dans lequel le capteur d'imagerie est monté dans ou sur un véhicule (G), en particulier un train ou une voiture, et
- dans lequel un catalogue de cartes (D) est fourni, dans lequel les cartes (D) incluent en plus une infrastructure de trafic qui est utilisée par le véhicule (G), en particulier des routes et/ou des voies ferrées (T ; $T_1$, $T_2$, $T_3$),

de préférence dans lequel un objet de référence venant en sens inverse (R ; $R_1$, $R_2$, $R_3$) associé à l'infrastructure de trafic que le véhicule (G) utilise est sélectionné.

9. Unité de diagnostic pour évaluer la fiabilité d'une unité de détection d'objets,

- dans laquelle l'unité de détection d'objets est configurée pour recevoir des données d'image, en particulier dans une séquence prédéfinie d'images et/ou d'une manière aléatoire, en particulier à partir de l'unité de diagnostic et/ou d'images (A) d'une scène prise par un capteur d'imagerie, et programmée

  ◦ pour détecter des images d'objets (B) et leurs positions (C) et leurs types d'objets dans des images bidimensionnelles ou tridimensionnelles (A, A') fournies à l'unité de détection d'objets en utilisant une détection d'objets et/ou un procédé de classification, en particulier un réseau de neurones, et
  ◦ pour fournir la position détectée (C) et le type d'objet de l'objet détecté (B) à l'unité de diagnostic, et

- dans laquelle l'unité de diagnostic est connectable à l'unité de détection d'objets et configurée pour recevoir des données, en particulier des positions détectées (C) et des types d'objets d'objets détectés (B), à partir de l'unité de détection d'objets, et pour transmettre au moins une image de test (A') à l'unité de détection d'objets, et dans laquelle l'unité de diagnostic est programmée pour

◦ sélectionner au moins un objet de référence (R ; $R_1$, $R_2$, $R_3$) avec une position connue (P ; $P_1$, $P_2$, $P_3$) et un type d'objet connu dans laquelle l'image dudit objet de référence (R ; $R_1$, $R_2$, $R_3$) doit être détectée par l'unité de détection d'objets, dans laquelle l'image dudit objet de référence (R ; $R_1$, $R_2$, $R_3$) est contenue dans l'image de test (A'),

◦ définir une marge de tolérance (M) autour de la position connue (P ; $P_1$, $P_2$, $P_3$) de l'objet de référence (R ; $R_1$, $R_2$, $R_3$) pour une détection acceptable de la position (P ; $P_1$, $P_2$, $P_3$) dudit objet de référence (R ; $R_1$, $R_2$, $R_3$) dans l'image de test (A'),

◦ comparer la position connue (P ; $P_1$, $P_2$, $P_3$) et le type d'objet de l'objet de référence (R ; $R_1$, $R_2$, $R_3$) avec la position détectée (C) et le type d'objet de l'objet détecté (B) fournis par l'unité de détection d'objets, et

◦ déterminer que l'unité de détection d'objets est fiable si

- le type d'objet de l'objet de référence (R ; $R_1$, $R_2$, $R_3$) correspond au type d'objet de l'objet détecté (B) et
- la position détectée (C) de l'objet détecté (D), en particulier une marge de détection (M') autour de la position détectée (C), se trouve sensiblement dans la marge de tolérance (M) définie auparavant autour de la position connue (P ; $P_1$, $P_2$, $P_3$) de l'objet de référence (R ; $R_1$, $R_2$, $R_3$).

**10.** Unité de diagnostic selon la revendication 9,

- **caractérisée en ce que** l'unité de diagnostic est configurée pour fournir des images de test (A'), en particulier des images (A), de préférence modifiées, d'une scène prise par un capteur d'imagerie et/ou des images de test (A') provenant d'un catalogue, à l'unité de détection d'objets
et/ou
- **caractérisée en ce que** l'unité de diagnostic est configurée pour

- insérer la au moins une image de test (A') dans une séquence d'images (A) d'une scène prise par un capteur d'imagerie et/ou
- sélectionner au moins une image (A) de la scène dans une séquence d'images (A) d'une scène prise par un capteur d'imagerie en tant qu'image de test (A') ou pour qu'elle soit modifiée en image de test (A') et/ou échanger au moins une image (A) de la scène dans une séquence d'images (A) d'une scène prise par un capteur d'imagerie pour une image de test (A')
et/ou

- **caractérisée en ce que** l'unité de diagnostic est programmée pour tester le fonctionnement correct du capteur d'imagerie avant la définition de l'objet de référence (R ; $R_1$, $R_2$, $R_3$) devant être détecté dans l'image (A) de la scène en évaluant si le capteur d'imagerie génère le nombre configuré de trames par seconde et/ou des valeurs d'intensité de pixels diffèrent entre deux trames consécutives.

**11.** Unité de diagnostic selon l'une quelconque des revendications 9 ou 10,

- **caractérisée en ce que** l'unité de diagnostic comprend une unité de stockage pour un catalogue prédéfini d'images de test (A'), dans laquelle lesdites images de test (A') du catalogue sont des images de test individuelles uniques (A') et
- **en ce que** l'unité de diagnostic est programmée pour sélectionner au moins une image de test (A') à partir dudit catalogue d'images de test uniques (A') et la fournir à l'unité de détection d'objets,
et/ou
- **caractérisée**

- **en ce que** l'unité de diagnostic comprend une unité de stockage pour un catalogue prédéfini de séquences d'images, dans laquelle un nombre desdites images de la séquence sont des images de test (A') contenant l'image de l'objet de référence (R ; $R_1$, $R_2$, $R_3$) et dans laquelle ledit nombre d'images de test (A') est inclus à des positions de séquence prédéfinies dans la séquence d'images de test (A') dans le catalogue d'images de test (A')
- **en ce que** l'unité de diagnostic est programmée

◦ pour sélectionner et fournir une séquence desdites images à partir du catalogue à l'unité de détection d'objets et
◦ pour déterminer que l'unité de détection d'objets est fiable si

- en plus les positions de séquence des images de test (A') contenant un objet de référence (R ; $R_1$, $R_2$, $R_3$) correspondent aux positions de séquence des images de test (A') dans lesquelles l'objet détecté (B) a été détecté.

**12.** Unité de diagnostic selon l'une quelconque des revendications 9 ou 10, **caractérisée en ce que** l'unité de diagnostic est programmée, après la sélection de l'objet de référence (R ; $R_1$, $R_2$, $R_3$), pour insérer l'image dudit objet de référence (R ; $R_1$, $R_2$, $R_3$), en particulier un objet de référence standard avec une forme connue, à une position connue prédéfinie (P ; $P_1$, $P_2$, $P_3$) dans l'image de test (A'), en particulier dans l'image (A) de la scène.

**13.** Unité de diagnostic selon l'une quelconque des revendications 9 à 12, en particulier selon l'une quelconque des revendications 9, 10 ou 12,

- **caractérisée**

- **en ce que** l'unité de diagnostic comprend une unité de stockage pour un catalogue prédéfini d'objets de référence (R ; $R_1$, $R_2$, $R_3$) et
- **en ce que** l'unité de diagnostic est programmée pour sélectionner l'objet de référence (R ; $R_1$, $R_2$, $R_3$) à partir du catalogue prédéfini d'objets de référence (R ; $R_1$, $R_2$, $R_3$), dans laquelle ledit catalogue d'objets de référence (R ; $R_1$, $R_2$, $R_3$) inclut une pluralité d'images desdits objets de référence (R ; $R_1$, $R_2$, $R_3$) capturées dans différentes conditions d'acquisition d'images, en particulier capturées sous des angles de prise de vue et/ou des conditions météorologiques et/ou des conditions d'éclairage variables,

et/ou
- **caractérisée en ce que** l'unité de diagnostic est programmée

- pour déterminer le contenu, en particulier la météo et/ou des conditions d'éclairage et/ou l'orientation de structures d'intérêt, de préférence une voie ferrée et/ou une route, de l'image de test (A'), en particulier de l'image (A) de la scène, de préférence en utilisant des réseaux de neurones, et
- pour sélectionner l'objet de référence (R ; $R_1$, $R_2$, $R_3$) sur la base du contenu déterminé de ladite image de test (A').

**14.** Unité de diagnostic selon l'une quelconque des revendications 9 à 13, en particulier selon l'une quelconque des revendications revendication 9, 10 ou 13, **caractérisée**

- **en ce que** l'unité de diagnostic est configurée pour recevoir des données d'emplacement à partir d'une unité de géolocalisation,
- **en ce que** l'unité de diagnostic comprend une unité de stockage pour au moins une carte (D) de la scène et
- **en ce que** l'unité de diagnostic est programmée

◦ pour trouver un emplacement, en particulier un emplacement d'un capteur d'imagerie, fourni à l'unité de diagnostic dans la carte (D) de la scène, dans laquelle ladite carte (D) inclut les positions (P ; $P_1$, $P_2$, $P_3$) et les types d'objets d'une pluralité d'objets de référence (R ; $R_1$, $R_2$, $R_3$) qui peuvent être capturés dans une image (A) de la scène depuis une distance prédéfinie, en particulier des panneaux de signalisation et/ou des signaux ferroviaires et/ou des feux de circulation, et
◦ pour sélectionner l'objet de référence (R ; $R_1$, $R_2$, $R_3$) devant être détecté dans l'image de test (A') dans ladite pluralité d'objets de référence (R ; $R_1$, $R_2$, $R_3$) sur la base de l'emplacement, en particulier l'emplacement du capteur d'imagerie, dans la scène et la carte (D) de la scène,
◦ en particulier pour sélectionner un objet de référence venant en sens inverse (P ; $P_1$, $P_2$, $P_3$).

**15.** Unité de diagnostic selon la revendication 14, **caractérisée en ce que** l'unité de diagnostic est programmée

◦ pour trouver l'emplacement, en particulier l'emplacement du capteur d'imagerie, fourni à l'unité de diagnostic dans un catalogue de cartes (D) qui est stocké dans l'unité de stockage, dans laquelle les cartes (D) incluent en plus une infrastructure de trafic pour une utilisation par des véhicules (G), en particulier des routes et/ou des voies ferrées (T ; $T_1$, $T_2$, $T_3$), et
◦ de préférence pour sélectionner un objet de référence venant en sens inverse (R ; $R_1$, $R_2$, $R_3$) associé à l'infrastructure de trafic à laquelle l'emplacement, en particulier l'emplacement du capteur d'imagerie, fourni à l'unité de diagnostic est associé.

**16.** Système d'imagerie comprenant au moins un capteur d'imagerie, une unité de détection d'objets et une unité de diagnostic pour évaluer la fiabilité de l'unité de détection d'objets,

- dans lequel le capteur d'imagerie, en particulier un capteur d'imagerie monté dans ou sur un véhicule (G), de préférence un train ou une voiture, est configuré pour prendre au moins une image (A) d'une scène,
- dans lequel l'unité de détection d'objets est configurée pour recevoir des données d'image, en particulier dans une séquence prédéfinie d'images et/ou d'une manière aléatoire, en particulier à partir de l'unité de diagnostic et/ou d'images (A) d'une scène prise par un capteur d'imagerie, et programmée

    ∘ pour détecter des images d'objets (B) et leurs positions (C) et leurs types d'objets dans des images bidimensionnelles ou tridimensionnelles (A, A') fournies à l'unité de détection d'objets en utilisant une détection d'objets et/ou un procédé de classification, en particulier un réseau de neurones, et
    ∘ pour fournir la position détectée (C) et le type d'objet de l'objet détecté (B) à l'unité de diagnostic, et

- dans lequel le système d'imagerie comprend une unité de diagnostic selon l'une quelconque des revendications 9 à 15, en particulier dans lequel l'unité de diagnostic est connectée au capteur d'imagerie.

**17.** Système d'imagerie selon la revendication 16,

- **caractérisé en ce que** le système d'imagerie comprend une unité de géolocalisation connectée à l'unité de diagnostic, dans lequel l'unité de géolocalisation est configurée pour déterminer l'emplacement du capteur d'imagerie, en particulier la position ($E_1$, $E_2$, $E_3$) et le champ de vision ($F_1$, $F_2$, $F_3$) du capteur d'imagerie, dans une scène,
et/ou
- **caractérisé en ce que** le capteur d'imagerie est configuré pour prendre des séquences d'images (A) d'une scène.

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018157934 A1

- EP 19179792

**Non-patent literature cited in the description**

- **NASCIMIENTO J.C. et al.** Performance evaluation of object detection algorithms for video surveillance. *IEEE Transactions on Multimedia,* August 2006, vol. 8 (4), 761-774
- **SIDDHARTH A et al.** Combining Deep Learning and Verification for Precise Object Instance Detection. *arxiv.org/abs/1912.12270v1, Conference on Robot Learning (CoRL),* 27 December 2019
- **HU XIAOPENG et al.** Reliability verification-based convolutional neural networks for object tracking. *IET Image Processing,* January 2019, vol. 13 (1), 175-185
- **J. REDMON et al.** *You Only Look Once: Unified, Real-Time Object Detection,* 2016
- **W. LIU et al.** *SSD: Single Shot MultiBox Detector,* 2016
- **L. CHEN et al.** *Encoder-Decoder with Atrous Separable Convolution for Semantic Image Segmentation,* 2018

- **S. LEE et al.** *VPGNet: Vanishing Point Guided Network for Lane and Road Marking Detection and Recognition,* 2017
- **LEE et al.** *Outdoor place recognition in urban environments using straight lines,* 2014
- **RUI FAN ; NAIM DAHNOUN.** *Real-Time Stereo Vision-Based Lane Detection System,* 2018
- **HAN MA.** *Multiple Lane Detection Algorithm Based on Optimised Dense Disparity Map Estimation,* 2018
- **DAVY NEVEN ; BERT DE BRABANDERE ; STAMATIOS GEORGOULIS ; MARC PROESMANS ; LUC VAN GOOL.** *Towards End-to-End Lane Detection: an Instance Segmentation Approach,* 2018
- **MIN BAI.** *Deep Multi-Sensor Lane Detection,* 2018